(19) Europäisches Patentamt
European Patent Office
Office européen des brevets

(11) Veröffentlichungsnummer: **0 471 713 B1**

(12) # EUROPÄISCHE PATENTSCHRIFT

(45) Veröffentlichungstag der Patentschrift: **07.09.94**

(51) Int. Cl.$^{5}$: **C09B 62/08**, C09B 62/507, D06P 1/38

(21) Anmeldenummer: **90906996.5**

(22) Anmeldetag: **04.05.90**

(86) Internationale Anmeldenummer: **PCT/EP90/00716**

(87) Internationale Veröffentlichungsnummer: **WO 90/13603 (15.11.90 90/26)**

(54) **WASSERLÖSLICHE AZOFARBSTOFFE, VERFAHREN ZU IHRER HERSTELLUNG UND IHRE VERWENDUNG.**

(30) Priorität: **10.05.89 DE 3915305**
**17.10.89 DE 3934514**

(43) Veröffentlichungstag der Anmeldung: **26.02.92 Patentblatt 92/09**

(45) Bekanntmachung des Hinweises auf die Patenterteilung: **07.09.94 Patentblatt 94/36**

(84) Benannte Vertragsstaaten: **AT BE CH DE ES FR GB IT LI NL**

(56) Entgegenhaltungen:
**EP-A- 0 040 806**
**FR-A- 2 066 070**

(73) Patentinhaber: **HOECHST AKTIENGESELL-SCHAFT**
**D-65926 Frankfurt (DE)**

(72) Erfinder: **BÜCH, Holger, Michael**
**Neugasse 4**
**D-6238 Hofheim am Taunus (DE)**
Erfinder: **SPRINGER, Hartmut**
**Am Erdbeerstein 27**
**D-6240 Königstein (DE)**

**EP 0 471 713 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Farbstoffe.

Aus der US-Patentschrift 3 758 470 sind Azofarbstoffe bekannt, die einen 2-Chlor-4-cyanamido-s-triazin-6-ylamino-Rest enthalten. Diese bekannten Farbstoffe haben jedoch gewisse anwendungstechnische Mängel; so sind sie insbesondere nicht zum Färben nach den Klotz-Kaltverweil-Verfahren und den verschiedenen Ausziehverfahren bei niedrigen Färbtemperaturen (40 bis 60 °C) geeignet.

Desweiteren sind aus der Europäischen Patentanmeldungs-Veröffentlichung Nr. 0 040 806A Farbstoffe bekannt, die an getrennter Stelle des Chromophors einen faserreaktiven Rest der Vinylsulfonreihe und als Weiteren faserreaktiven Rest eine Fluor-s-triazinylamino-Gruppe, die als Weiteren Substituenten unter anderem eine gegebenenfalls substituierte Aminogruppe enthält, besitzen. In dem Tabellenbeispiel 23 ist ein Monoazofarbstoff genannt, der eine 2-Cyanamido-4-fluor-s-triazin-6-ylamino-Gruppe enthalten soll, deren Synthese jedoch auf Schwierigkeiten stößt.

Mit der vorliegenden Erfindung wurden nunmehr neue, wässerlösliche, diesbezüglich verbesserte Azofarbstoffe gefunden, die der allgemeinen Formel (1)

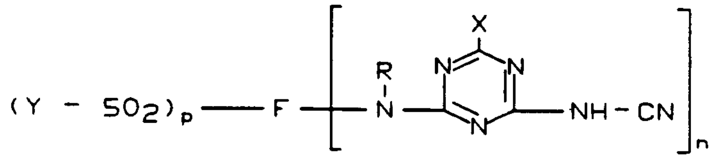

(1)

entsprechen; in dieser Formel bedeuten:

- F ist der Rest eines Monoazo-, Disazo- oder Polyazofarbstoffes oder eines Schwermetallkomplex-Azofarbstoffes, wie eines 1:1-Kupferkomplex-, 1:2-Chromkomplex- oder 1:2-Kobaltkomplex-Azofarbstoffes;
- R ist Wasserstoff oder Alkyl von 1 bis 4 C-Atomen, wie Methyl oder Ethyl, das durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, Carboxy, Sulfamoyl, Sulfo oder Sulfato substituiert sein kann, und ist bevorzugt Methyl oder Ethyl und insbesondere Wasserstoff;
- X ist Chlor, Brom, Sulfo, eine Alkylsulfonyl mit 1 bis 4 C-Atomen oder Phenylsulfonyl, bevorzugt Chlor;
- Y ist Vinyl, β-Sulfatoethyl, β-Thiosulfatoethyl, β-Phosphatoethyl, β-Alkanoyloxy-ethyl mit 2 bis 5 C-Atomen im Alkanoylrest, wie β-Acetyloxyethyl, β-Benzoyloxy-ethyl, β-(Sulfobenzoyloxy)-ethyl, β-(p-Toluolsulfonyloxy)-ethyl oder β-Halogenethyl, wie β-Bromethyl oder β-Chlorethyl, bevorzugt Vinyl und insbesondere β-Sulfatoethyl;
- p ist die Zahl 1 oder 2;
- n ist die Zahl 1 oder 2, bevorzugt 1.

Die Gruppen -$SO_2$-Y können über einen Alkylenrest von 1 bis 4 C-Atomen, wie die Methylengruppe, oder über eine Alkylaminogruppe von 1 bis 4 C-Atomen, wie die Methylamino- oder Ethylaminogruppe, an ein aromatisches Kohlenstoffatom von F gebunden sein.

Bevorzugt ist F der Rest eines Mono- oder Disazofarbstoffes oder der Rest eines o,o'-1:1-Kupferkomplex-Mono- oder -Disazofarbstoffes. Der Rest F kann in seinem Grundgerüst die bei organischen Farbstoffen üblichen Substituenten, einschließlich faserreaktive Gruppe anderer als der in Formel (1) angegebenen Art, gebunden enthalten. Solche Substituenten sind beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Acylaminogruppen von 2 bis 8 C-Atomen, wie die Acetylamino-, Propionylamino- oder Benzoylaminogruppe; primäre und mono- oder disubstituierte Aminogruppen, wie beispielsweise durch Alkylgruppen von 1 bis 4 C-Atomen und/oder Phenylgruppen, wie Monoalkylamino- und Dialkylaminogruppen mit 1 bis 4 C-Atomen im Alkylrest, Phenylamino- oder N-($C_1$-$C_4$-Alkyl)-N-phenylamino-Gruppen, wobei die Alkylreste noch substituiert sein können, beispielsweise durch Phenyl, Sulfophenyl, Hydroxy, Sulfato, Sulfo und Carboxy, und die Phenylgruppen noch subsituiert sein können, wie durch Chlor, Sulfo, Carboxy, Methyl und/oder Methoxy, so beispielsweise Methylamino-, Ethylamino-, Propylamino-, Isopropylamino-, Butylamino-, N,N-Di-(β-hydroxyethyl)-amino-, N,N-Di-(β-sulfatoethyl)-amino-, Sulfobenzylamino-, N,N-Di-(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl

und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, wie beispieslweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkylsulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methylsulfamoyl, N-Ethylsulfamoyl, N-Propyl-sulfamoyl, N-Isopropyl-sulfamoyl, N-Butyl-sulfamoyl, N-($\beta$-Hydroxyethyl)-sulfamoyl und N,N-Di-($\beta$-hydroxyethyl)-sulfamoyl; N-Phenyl-sulfamoyl-, Ureido-, Hydroxy-, Carboxy-, Sulfomethyl- und sulfogruppen.

Vorzugsweise ist der Farbstoffrest F durch eine oder mehrere, wie 2 bis 4, Sulfogruppen substituiert, und weiterhin kann er bevorzugt Substituenten enthalten, die aus der Gruppe Methyl, Ethyl, Methoxy, Ethoxy, Acetylamino, Benzoylamino, Amino, Chlor, Brom, Ureido, Hydroxy, Carboxy und Sulfomethyl ausgewählt sind.

Der Farbstoffrest F kann auch andere, aus der Literatur bekannte faserreaktive Gruppen besitzen, die nicht der Formel $-SO_2-Y$ mit Y der obengenannten Bedeutung und nicht der später angegebenen allgemeinen Formel (3) entsprechen. Solche bekannten faserreaktiven Gruppen sind beispielsweise ein niedrigmolekularer, gegebenenfalls durch ein abspaltbares Atom oder eine abspaltbare Gruppe substituierter Alkanoylaminorest, ein niedrigmolekularer, gegebenenfalls durch ein abspaltbares Atom oder eine abspaltbare Gruppe substituierter Alkenoylamino- oder Alkensulfonylamino-Rest oder ein durch ein abspaltbares Atom oder eine abspaltbare Gruppe substituierter carbocyclischer, carbocyclisch-heterocyclischer oder heterocyclischer Rest, die über eine Carbonylamino- oder Sulfonylamino-Gruppe an den Rest A gebunden sind, wobei die heterocyclischen Anteile dieser Reste vier-, fünf- oder sechs-gliedrig sind, oder ein über eine Amino-, Methylamino- oder Ethylamino- Gruppe an den Rest A gebundener, durch ein abspaltbares Atom oder eine abspaltbare Gruppe substituierter Triazinyl- oder Pyrimidinyl-Rest. Solche Reste sind beispielsweise ein über eine Amino-, Methylamino- oder Ethylamino- Gruppe gebundener halogensubstituierter sechsgliedriger heterocyclischer Rest, wie beispielsweise ein Halogentriazinyl- oder Halogenpyrimidinyl-Rest, oder sind aliphatische Acylaminoreste, wie ein Halogenacetylamino- oder Halogenpropionylamino-Rest.

Formelreste R sind beispielsweise: Wasserstoff, Methyl, Ethyl, Propyl, Isopropyl, Butyl, Isobutyl, sek.-Butyl, tert.-Butyl, Carboxymethyl, $\beta$-Carboxyethyl, $\beta$-Carboxypropyl, Methoxycarbonylmethyl, Ethoxycarbonylmethyl, $\beta$-Methoxyethyl, $\beta$-Ethoxyethyl, $\beta$-Methoxypropyl, $\beta$-Chlorethyl, $\tau$-Brompropyl, $\beta$-Hydroxyethyl, $\beta$-Hydroxybutyl, $\beta$-Cyanoethyl, Sulfomethyl, $\beta$-Sulfoethyl, Amidosulfonylmethyl und $\beta$-Sulfatoethyl.

Von den erfindungsgemäßen 1:1-Kupferkomplex-Azofarbstoffe sind diejenigen der Benzol- und Naphthalinreihe bevorzugt.

Erfindungsgemäße Mono- und Disazofarbstoffe der allgemeinen Formel (1) sind beispielsweise solche der allgemeinen Formel (2a) oder (2b)

$$(Y\text{-}SO_2)_p - D - N = N \leftarrow\!\!(E - N = N)_v - K - Z \qquad (2a)$$

$$Z - D - N = N \leftarrow\!\!(E - N = N)_v - K - (SO_2\text{-}Y)_p \qquad (2b)$$

oder eines davon abgeleiteten Schwermetallkomplexes, wie 1:1-Kupferkomplexes, in welchen

| | |
|---|---|
| Y und p | die obengenannten Bedeutungen haben, |
| D | der Rest einer Diazokomponente der Benzol- oder Naphthalinreihe ist, |
| E | der Rest einer Mittelkomponente der Benzol- oder Naphthalinreihe bedeutet und |
| K | der Rest einer Kupplungskomponente der Benzol-, Naphthalin-, Pyrazolon-, 6-Hydroxypyridon(2)- oder Acetessigsäurearylamid-Reihe ist, wobei D, E und K für Azofarbstoffe übliche Substituenten, insbesondere Sulfo-, Carboxy-, Hydroxy-, Amino-, Methyl-, Ethyl-, Methoxy-, Ethoxygruppen, gegebenenfalls substituierte Alkanoylaminogruppen von 2 bis 4 C-Atomen im Alkanoylrest, gegebenenfalls substituierte Benzoylaminogruppen und Halogenatome, wie Brom- und Chloratome, und/oder die Trifluormethylgruppe enthalten können, wobei D, E und K zusammen mindestens zwei Sulfogruppen, vorzugsweise drei oder vier Sulfogruppen, besitzen, |
| v | für die Zahl Null oder 1 steht und |
| Z | eine Gruppe der Formel (3) |

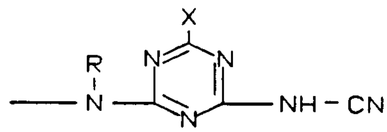 (3)

mit R und X der obengenannten Bedeutung ist.

Bevorzugt sind weiterhin Disazofarbstoffe der allgemeinen Formel (2c)

$(Y\text{-}SO_2)_p - D - N = N - K^o - N = N - D - Z$ (2c)

in welchen y, p und Z die obengenannten Bedeutungen haben und beide D unabhängig voneinander den Rest einer Diazokomponente der Benzol- oder Naphthalinreihe und K° den Rest einer bivalenten Kupplungskomponente der Naphthalinreihe darstellen, wobei die D und K° die für Azofarbstoffe üblichen Substituenten, wie Sulfo-, Carboxy-, Hydroxy-, Amino-, Methyl-, Ethyl-, Trifluormethyl-, Methoxy- und Ethoxygruppen, gegebenenfalls substituierte Alkanoylaminogruppen mit 2 bis 4 C-Atomen im Alkanoylrest, gegebenenfalls substituierte Benzoylaminogruppen und Halogenatome, wie Chlor- und Bromatome, tragen können, wobei beide D und K° zusammen mindestens zwei Sulfogruppen, vorzugsweise drei oder vier Sulfogruppen, enthalten.

Von den erfindungsgemäßen Disazoverbindungen der allgemeinen Formel (2c) sind insbesondere diejenigen hervorzuheben, die den allgemeinen Formel (2d) und (2e)

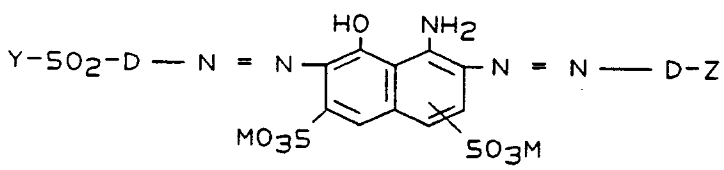 (2d)

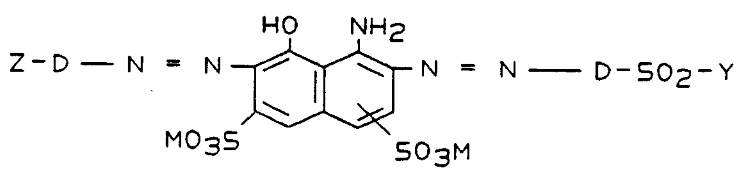 (2e)

entsprechen, in welchen

M Wasserstoff oder ein Alkalimetall, wie Natrium, Kalium oder Lithium, ist und

D, Y und Z die obengenannten Bedeutungen haben.

Bevorzugte erfindungsgemäße Metallkomplex-Azofarbstoffe sind beispielsweise solche, die der allgemeinen Formel (2f)

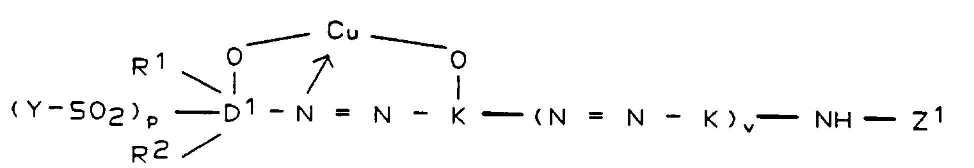 (2f)

entsprechen, in welcher

$Z^1$ ein Rest der allgemeinen Formel (3a)

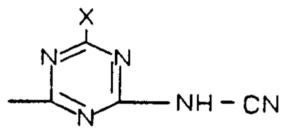
(3a)

mit X der obengenannten , insbesondere bevorzugten, Bedeutung ist und

$D^1$ die nachstehend angegebene Bedeutung und Y, p, $R^1$, $R^2$, v und K die obengenannten, insbesondere bevorzugten, Bedeutungen haben,

wobei die beiden K, unabhängig voneinander, als Rest einer Kupplungskomponente insbesondere bevorzugt den Rest eines amino-substituierten Naphthols, das durch 1 oder 2 Sulfogruppen substituiert sein kann, darstellen.

Von den erfindungsgemäßen Farbstoffen sind weiterhin diejenigen als bevorzugt zu nennen, die den allgemeinen Formeln (2A) bis (2G) entsprechen:

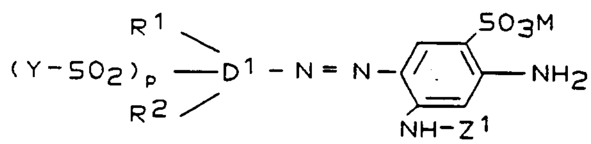
(2A)

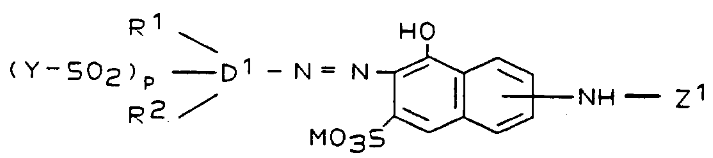
(2B)

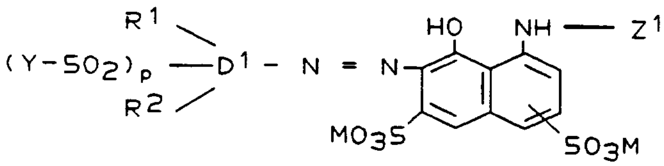
(2C)

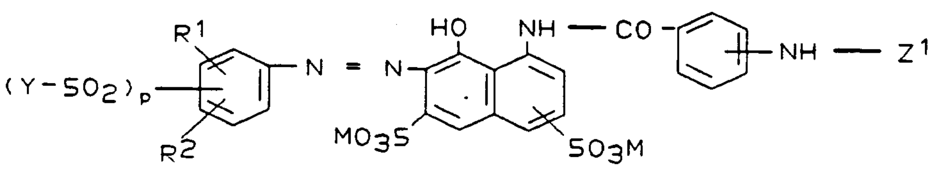
(2D)

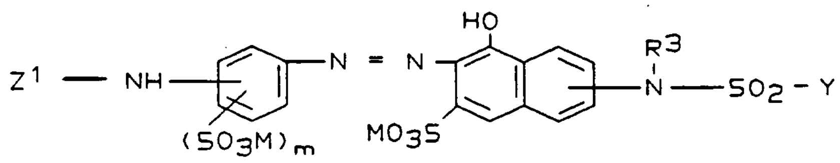

(2E)

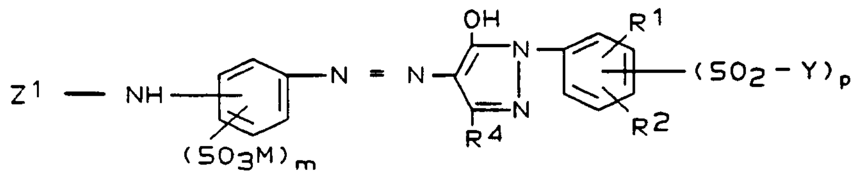

(2F)

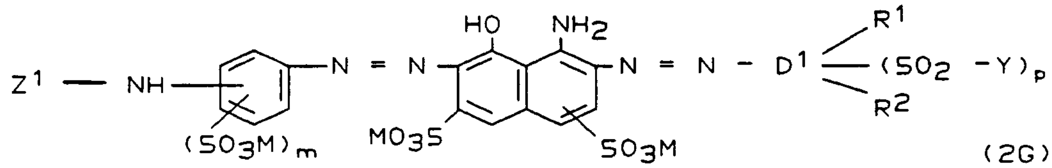

(2G)

in welchen bedeuten:

| | |
|---|---|
| M, Y, $Z^1$ und p | haben eine der obengenannten, insbesondere bevorzugten, Bedeutungen; |
| $R^1$ | ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Trifluormethyl, Carboxy oder Sulfo; |
| $R^2$ | ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, oder Sulfo; |
| $D^1$ | ist ein Benzolring oder ist ein Naphthalinring, an den die Azogruppe bevorzugt in β-Stellung gebunden ist, wobei im Falle, daß D den Naphthalinring bedeutet, $R^1$ und $R^2$ bevorzugt jedes, unabhängig voneinander, Wasserstoff oder Sulfo bedeuten; |
| m | steht für die Zahl Null, 1 oder 2 (wobei im Falle von m gleich Null diese Gruppe Wasserstoff ist); |
| $R^3$ | ist Alkyl von 1 bis 4 C-Atomen, wie Ethyl oder Methyl; |
| $R^4$ | ist Methyl, Carboxy oder Carbalkoxy von 2 bis 5 C-Atomen, wie Carbomethoxy; |

die eine in Formel (2G) an den Aminonaphtholrest gebundene Gruppe $-SO_3M$ steht bevorzugt in meta-Stellung zur Aminogruppe.

Die vorliegende Erfindung betrifft weiterhin Verfahren zur Herstellung der erfindungsgemäßen Farbstoffe der allgemeinen Formel (1). Sie lassen sich in an und für sich üblicher Weise analog bekannten, für die jeweilige Farbstoffklasse spezifischen Synthesewegen herstellen, indem man für den jeweiligen Farbstoff typische Vorprodukte, von denen mindestens eines eine Gruppe der allgemeinen Formel (3) und mindestens eines eine Gruppe der allgemeinen Formel $-SO_2-Y$ enthält, miteinander umsetzt oder indem man von einer aminogruppenhaltigen Ausgangsverbindung der allgemeinen Formel (14)

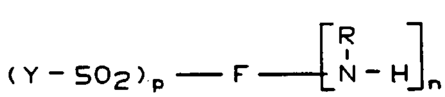

(14)

in welcher Y, p, F, R und n die obengenannten Bedeutungen haben, ausgeht und diese mit einem Halogen-s-triazin der allgemeinen Formel (15)

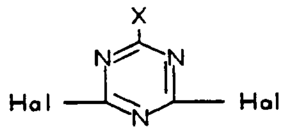

(15)

in welcher Hal für ein Chlor- oder Bromatom steht und X die obengenannte Bedeutung besitzt, und mit Cyanamid oder einem Alkalimetallsalz davon in stöchiometrischen Mengen in beliebiger Reihenfolge miteinander umsetzt und gegebenenfalls anschließend weitere, dem Fachmann geläufige, erforderliche Umwandlungsreaktionen durchführt. Diese Ausgangsverbindungen, einschließlich der Verbindungen der allgemeinen Formel (14), sind zahlreich in der Literatur beschrieben. Die Umsetzung kann analog den in der Literatur bekannten und üblichen Verfahrensweisen der Umsetzung eines Halogentriazins mit einer Aminoverbindung und/oder mit Cyanamid (s. beispielsweise die anfangs erwähnte US-Patentschrift 3 758 470) durchgeführt werden.

Insbesondere lassen sich die erfindungsgemäßen Farbstoffe erfindungsgemäß herstellen, indem man eine Verbindung entsprechend der allgemeinen Formel (16)

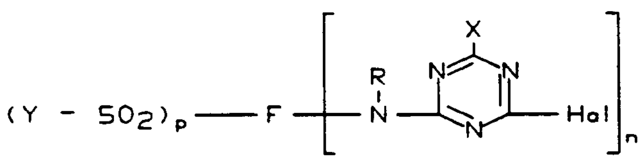

(16)

in welcher Y die obengenannte Bedeutung besitzt, bevorzugt jedoch eine β-Hydroxyethyl-Gruppe ist, und in welcher p, F, R, X, Hal und n die obengenannten Bedeutungen haben, mit Cyanamid oder einem Alkalimetallsalz davon umsetzt, wobei man die gegebenenfalls erhaltene β-Hydroxyethyl-Verbindung in eine Verbindung der Formel (1) mit einer anderen Gruppe $-SO_2-Y$ , wie später beschrieben,überführt,
oder indem man eine Aminoverbindung der allgemeinen Formel (14) mit einer Verbindung der allgemeinen Formel (17)

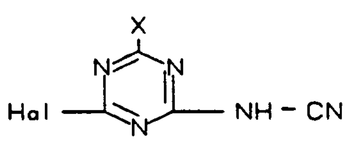

(17)

in welcher X und Hal die Obengenannten Bedeutungen haben, umsetzt.

Die erfindungsgemäßen Azoverbindungen lassen sich ebenfalls gemäß den üblichen Verfahrensweisen der Diazotierung und Kupplung herstellen, indem man von der für den jeweiligen Farbstoff entsprechenden Diazo- und Kupplungskomponenten ausgeht, von denen die eine Komponente eine oder zwei Gruppen der allgemeinen Formel $-SO_2-Y$ mit Y der obengenannten Bedeutung enthält und die andere einen Rest der allgemeinen Formel (3) besitzt. Diazokomponenten und Kupplungskomponenten mit einer oder zwei Gruppen der Formel $-SO_2-Y$ oder einer Gruppe der allgemeinen Formel (3), bzw. deren Synthese sind ebenfalls in der Literatur beschrieben.

Die Umsetzung der Ausgangsverbindung der allgemeinen Formel (16) mit Cyanamid oder einem Alkalimetallsalz davon erfolgt im wäßrigen Medium, vorzugsweise in Lösung, bei einer Temperatur zwischen 20 und 95 °C, vorzugsweise zwischen 40 und 70 °C, und bei einem pH-Wert zwischen 7 und 12, vorzugsweise zwischen 8 und 10.

Die Umsetzung der Ausgangsverbindung der allgemeinen Formel (14) mit der Verbindung der allgemeinen Formel (17) erfolgt im wäßrigen oder wäßrig-organischen Medium in Suspension oder Lösung bei einer Temperatur zwischen 0 und 60 °C, vorzugsweise zwischen 15 und 30 °C, und bei einem pH-Wert zwischen 2 und 7, vorzugsweise zwischen 3 und 4,5. Der organische Anteil des Reaktionsmediums ist beispielsweise Aceton, Dimethylformamid oder N-Methyl-pyrrolidon.

Unter bestimmten Reaktionsbedingungen kann bei einem Halogentriazinrest Hydrolyse auftreten; deswegen muß bei einem Zwischenprodukt bzw. Vorprodukt, das eine Schutzgruppe, wie beispielsweise eine

Acetylaminogruppe enthält, die Abspaltung der Acetylgruppe durch Verseifung vorgenommen werden, bevor die Umsetzung mit dem Halogentriazin erfolgt. In welcher Reihenfolge die verschiedenen oben erwähnten Umsetzungen zwischen den Halogentriazin- und Aminoausgangsverbindungen zweckmäßig zuerst ausgeführt werden, ist von Fall zu Fall verschieden und richtet sich vor allem nach der Löslichkeit der beteiligten Aminoverbindungen und der Basizität der Aminogruppen, die mit dem Halogentriazinrest umgesetzt werden sollen.

Die erfindungsgemäße Synthese durch Diazotierungs- und Kupplungsreaktion der entsprechenden Diazo- und Kupplungs-Ausgangskomponente erfolgt in der üblichen Verfahrensweise der Diazotierungs- und Kupplungsreaktionen, so die Diazotierung in der Regel bei einer Temperatur zwischen -5°C und +15°C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 25°C, ebenso bevorzugt im wäßrigen Medium.

Bei der erfindungsgemäßen Synthese der erfindungsgemäßen Schwermetallkomplex-Azofarbstoffe kann man beispielsweise auch von solchen metallfreien Azofarbstoffen ausgehen, die der allgemeinen Formel (1) entsprechen, in welchen jedoch die Diazo- und Kupplungskomponenten in ortho-Stellung zur Azogruppe jeweils eine zur Komplexbildung befähigte Hydroxygruppe oder Carboxygruppe enthalten. Diese o,o'-Dihydroxy- oder o-Carboxy-o'-hydroxy-azo-Ausgangsverbindung entsprechend der allgemeinen Formel (1) wird sodann in üblicher und bekannter Verfahrensweise mit einem ein Schwermetallion abgebenden Agenz, wie beispielsweise Kupferchlorid, Kupfersulfat, Chromchlorid, Chromsulfat und Kobaltchlorid, zum erfindungsgemäßen Schwermetallkomplex-Azofarbstoff umgesetzt.

Beispielsweise kann man die erfindungsgemäßen Kupferkomplex-Azoverbindungen der allgemeinen Formel (2f) in der Weise herstellen, daß man eine Verbindung der allgemeinen Formel (18)

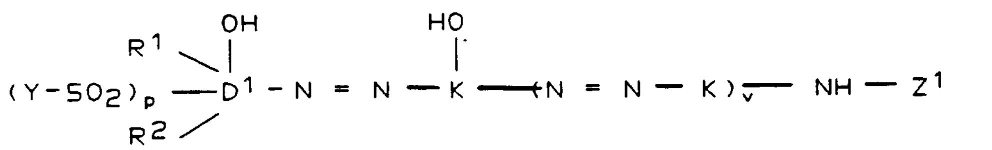

(18)

in welcher die einzelnen Formelglieder eine der obengenannnten Bedeutungen besitzen, mit einem ein Kupferion abgebenden Agenz, wie beispielsweise Kupferchlorid oder Kupfersulfat, in wäßrigem Medium bei einer Temperatur zwischen 0 und 30°C umsetzt.

Wie bereits zuvor angedeutet, können die erfindungsgemäßen Farbstoffe erfindungsgemäß auch so hergestellt werden, indem man von einer Verbindung ausgeht, die der allgemeinen Formel (1) mit den angegebenen Bedeutungen entspricht, jedoch mit dem Unterschied, daß die Gruppe(n) -$SO_2$-Y β-Hydroxyethylsulfonyl-Gruppen sind (diese Ausgangsverbindung läßt sich analog den oben angegebenen erfindungsgemäßen Verfahrensweisen herstellen, indem man von entsprechenden Ausgangsverbindungen mit einer β-Hydroxyethylsulfonyl-Gruppe ausgeht), und in dieser Ausgangsverbindung entsprechend der Formel (1) mit Y gleich β-Hydroxyethyl die β-Hydroxyethylsulfonyl-Gruppen analog bekannten Verfahrensweisen in andere Gruppen -$SO_2$-Y der erfindungsgemäßen Verbindung (1) überführt, so beispielsweise in deren Esterderivate, wie beispielsweise von mehrwertigen anorganischen Säuren oder von aliphatischen und aromatischen Carbon- oder Sulfonsäuren, so beispielsweise in Verbindungen, in welchen Y für die β-Chlorethyl-, β-Sulfatoethyl-,β-Phosphatoethyl-, β-Thiosulfatoethyl-, β-Acetyloxyethyl- oder β-Toluylsulfonyloxyethyl-Gruppe steht. Hierfür geeignete Veresterungs- und Acylierungsmittel sind beispielsweise die entsprechenden anorganischen oder organischen Säuren oder deren Anhydride oder Halogenide oder Amide, wie beispielsweise Schwefelsäure, Schwefeltrioxid enthaltende Schwefelsäure, Chlorsulfonsäure, Amidosulfonsäure, Phosphorsäure, Polyphosphorsäure, Phosphoroxychlorid, Gemische aus Phosphorsäure und Phosphorpentoxid, Acetanhydrid, Toluolsulfochlorid und Thionylchlorid.

Die Sulfatierung erfolgt beispielsweise durch Umsetzung mit konzentrierter Schwefelsäure bei einer Temperatur zwischen 0 und 20°C oder durch Umsetzung mit Chlorsulfonsäure in einem polaren organischen Lösemittel, wie beispielsweise N-Methyl-pyrrolidon bei einer Temperatur zwischen 10 und 80°C. Vorzugsweise erfolgt die Sulfatierung durch Eintragen des β-hydroxyethylgruppen-haltigen Ausgangsfarbstoffes in Schwefelsäuremonohydrat bei einer Temperatur zwischen 5 und 15°C.

Diejenigen Verbindungen, in welchen Y für die Vinylgruppe steht, können aus deren analogen Esterderivaten mittels Alkali, so in wäßrigem Medium bei einem pH-Wert von 10 bis 12 und einer Temperatur

zwischen 30 und 50 °C während 10 bis 20 Minuten, hergestellt werden. Die Synthese von beispielsweise β-(Dialkylamino)-ethylsulfonyl- und β-Thiosulfatoethylsulfonyl-Derivaten erfolgt durch Umsetzung von deren Vinylsulfonyl-Verbindungen mit dem entsprechenden Dialkylamin oder mit einem Alkalisalz der Thioschwefelsäure, wie Natriumthiosulfat. Alle diese Verfahrensweisen der Überführung von einer Gruppe $-SO_2-Y$ in eine andere sind dem Fachmann auf diesem faserreaktiven Gebiet geläufig und zahlreich in der Literatur beschrieben.

Die Ausgangsverbindung der allgemeinen Formel (17) kann gemäß oder analog den Angaben der anfangs erwähnten US-Patentschrift 3 758 470 hergestellt werden, die Umsetzung erfolgt in wäßrigem oder wäßrig-organischem Medium in Suspension oder Lösung (wobei das organische Medium beispielsweise Aceton, Dimethylformamid und N-Methylpyrrolidon ist). Vorzugsweise wird diese Kondensationsreaktion bei einer Temperatur zwischen -5 °C und +30 °C, insbesondere zwischen 0 und 5 °C, und bei einem pH-Wert zwischen 7 und 12, insbesondere zwischen 8 und 10, durchgeführt.

Die Ausgangsverbindungen, wie beispielsweise Diazokomponenten, Kupplungskomponenten und Triazine, sind zahlreich in der Literatur beschrieben.

Aromatische Reste D der Diazokomponenten $D-NH_2$, die eine faserreaktive Gruppe der Formel $Y-SO_2-$ tragen, sind beispielsweise solche der Amine der allgemeinen Formeln (4a) und (4b)

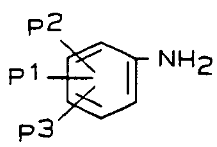 (4a) 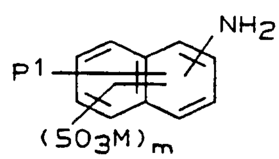 (4b)

in welchen

$P^1$ einen Rest der Formel (5a)

$$[\ Y-SO_2 - (CH_2)_r \ ]_p - \qquad (5a)$$

bedeutet, in welcher

Y und p die obengenannten Bedeutungen haben und

r die Zahl Null, 1 oder 2 ist,

$P^2$ Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$P^3$ Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

wobei der Benzolkern in Formel (4a) und (4b) zusätzlich in ortho-Stellung zur Aminogruppe eine Hydroxygruppe enthalten kann,

m die Zahl Null, 1 oder 2 bedeutet (wobei diese Gruppe im Falle von p gleich Null ein Wasserstoffatom bedeutet) und

M die obengenannte Bedeutung hat.

Bevorzugt ist hiervon $P^2$ gleich Wasserstoff, Methyl, Methoxy, Brom, Chlor, Carboxy und Sulfo sowie $P^3$ gleich Wasserstoff, Methyl, Methoxy, Chlor, Carboxy, Sulfo und Acetylamino.

Die Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$, Carboxygruppen Gruppen entsprechend der allgemeinen Formel $-COOM$, Phosphatogruppen Gruppen entsprechend der allgemeinen Formel $-OPO_3M_2$, Thiosulfatogruppen Gruppen entsprechend der allgemeinen Formel $-S-SO_3M$ und Sulfatogruppen Gruppen entsprechend der allgemeinen Formel $-OSO_3M$, jeweils mit M der obengenannten Bedeutung.

Aromatische Amine der Diazokomponente $Z-D-NH_2$ mit dem faserreaktiven Rest Z gehen bevorzugt von aromatischen Aminen der allgemeinen Formeln (4c) und (4d)

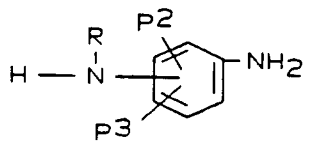 (4c) 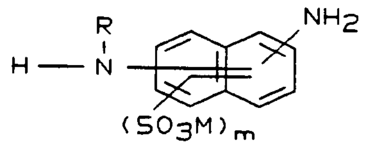 (4d)

aus, in welchen R, M, m, $P^2$ und $P^3$ die oben angegebenen, insbesondere bevorzugten Bedeutungen haben, wobei der Benzolkern in Formeln (4c) und (4d) zusätzlich in ortho-Stellung zur Aminogruppe $-NH_2$ eine Hydroxygruppe enthalten kann.

Diamino-Ausgangsverbindungen, bspw. der Formeln (4c) und (4d), die als Diazokomponenten zur Synthese der erfindungsgemäßen Azoverbindungen eingesetzt werden können, sind beispielsweise: 1,3-Diaminobenzol, 1,4-Diaminobenzol, 1,3-Diamino-4-chlorbenzol, 1,3-Diamino-4-methylbenzol, 1,3-Diamino-4-ethylbenzol, 1,3-Diamino-4-methoxybenzol, 1,3-Diamino-4-ethoxybenzol, 1,4-Diamino-2-methylbenzol, 1,4-Diamino-2-methoxybenzol, 1,4-Diamino-2-ethoxybenzol, 1,4-Diamino-2-chlorbenzol, 1,4-Diamino-2,5-dimethylbenzol, 1,4-Diamino-2,5-diethylbenzol, 1,4-Diamino-2-methyl-5-methoxybenzol, 1,4-Diamino-2,5-dimethoxybenzol, 1,4-Diamino-2,5-diethoxybenzol, 2,6-Diamino-naphthalin, 1,4-Diaminonaphthalin-2-sulfonsäure, 2,6-Diaminonaphthalin-8-sulfonsäure, 2,6-Diaminonaphthalin-4,8-disulfonsäure, 1,4-Diaminonaphthalin-6-sulfonsäure, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxybenzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2-carbonsäure, 1,4-Diaminobenzol-2,5-disulfonsäure, 1,3-Diaminobenzol-4-carbonsäure, 1,2-Diaminobenzol-4-carbonsäure, 1,3-Diaminobenzol-5-carbonsäure, 1,4-Diamino-2-methyl-benzol, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methyl-benzol-5-sulfonsäure, 1,5-Diamino-6-methylbenzol-3-sulfonsäure, 1,3-Diamino-6-methylbenzol-4-sulfonsäure, 3-(3'-Aminobenzoylamino)-1-aminobenzol-6-sulfonsäure, 3-(4'-Aminobenzoylamino)-1-aminobenzol-6-sulfonsäure, 1-(4'-Aminobenzoylamino)-4-aminobenzol-2,5-disulfonsäure, 4,4'-Diaminodiphenyloxid, 4,4'-Diamino-diphenylharnstoff-2,2'-disulfonsäure, 4,4'-Diaminodiphenyloxyethan-2,2'-disulfonsäure, 4,4'-Diaminostilben-2,2'-disulfonsäure, 4,4'-Diaminodiphenylethan-2,2'-disulfonsäure, 2-Amino-5-aminomethyl-naphthalin-1-sulfonsäure, 2-Amino-5-aminomethyl-naphthalin-1,7-disulfonsäure.

Wenn bei der erfindungsgemäßen Synthese, wie oben angegeben, als Diazokomponente statt eines Diamins eine Aminoalkanoylamino-Verbindung eingesetzt wird, aus der nachträglich die Alkanoylgruppe, wie bspw. die Acetylgruppe, durch Verseifen wieder abgespalten wird, kommen die Monoalkanoylverbindungen der oben genannten Diazokomponenten in Frage, wie beispielsweise 1-Acetylamino-3-aminobenzol-4-sulfonsäure und 1-Acetylamino-4-aminobenzol-3-sulfonsäure.

Ausgangsamine mit einer Gruppe $Y-SO_2-$ , wie beispielsweise solche der Formeln (4a) und (4b), sind beispielsweise 2-($\beta$-Sulfatoethylsulfonyl)-anilin, 3-($\beta$-Sulfatoethylsulfonyl)-anilin, 4-($\beta$-Sulfatoethylsulfonyl)-anilin, 2-Carboxy-5-($\beta$-sulfatoethylsulfonyl)-anilin, 2-Chlor-3-($\beta$-Sulfatoethylsulfonyl)-anilin, 2-Chlor-4-($\beta$-sulfatoethylsulfonyl)-anilin, 2-Ethoxy-4- oder -5-($\beta$-sulfatoethylsulfonyl)-anilin, 2-Ethyl-4-($\beta$-sulfatoethylsulfonyl)-anilin, 2-Methoxy-5-($\beta$-sulfatoethylsulfonyl)-anilin, 2,4-Diethoxy-5-($\beta$-sulfatoethylsulfonyl)-anilin, 2,4-Dimethoxy-5-($\beta$-sulfatoethylsulfonyl)-anilin, 2,5-Dimethoxy-4-($\beta$-sulfatoethylsulfonyl)-anilin, 2-Methoxy-5-methyl-4-($\beta$-sulfatoethylsulfonyl)-anilin, 2- oder 3- oder 4-($\beta$-Thiosulfatoethylsulfonyl)-anilin, 2-Methoxy-5-($\beta$-thiosulfatoethylsulfonyl)-anilin, 2-Sulfo-4-($\beta$-phosphatoethylsulfonyl)-anilin, 2-Sulfo-4-vinylsulfonyl-anilin, 2-Hydroxy-4- oder -5-($\beta$-sulfatoethylsulfonyl)-anilin, 2-Chlor-4- oder -5-($\beta$-chlorethylsulfonyl)-anilin, 2-Hydroxy-3-sulfo-5-($\beta$-sulfatoethylsulfonyl)-anilin, 3- oder 4-($\beta$-Acetoxyethylsulfonyl)-anilin, 2-Methoxy-4-[$\beta$-(N-methyltauryl)-ethylsulfonyl]-anilin, 5-($\beta$-Sulfatoethylsulfonyl)-2-amino-naphthalin, 6- oder 7- oder 8-($\beta$-Sulfatoethylsulfonyl)-2-amino-naphthalin, 6-($\beta$-Sulfatoethylsulfonyl)-1-sulfo-2-amino-naphthalin, 5-($\beta$-Sulfatoethylsulfonyl)-1-sulfo-2-amino-naphthalin, 8-($\beta$-Sulfatoethylsulfonyl)-6-sulfo-2-amino-naphthalin.

Bevorzugte Reste D oder $D^1$ mit einer faserreaktiven Gruppe $Y-SO_2-$ oder Z sind in den Formeln (2) bzw. (4) solche der allgemeinen Formeln (6a) bis (6d):

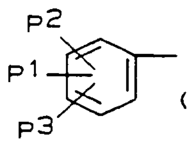 (6a)

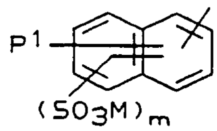 (6b)

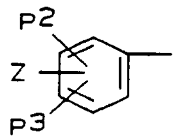 (6c)

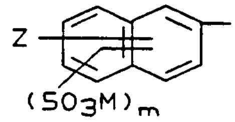 (6d)

in welchen $P^1$, $P^2$, $P^3$, Z, m und M die obengenannten Bedeutungen haben.

Aromatische Reste E einer kupplungsfähigen und diazotierbaren Verbindung der allgemeinen Formel H-E-$NH_2$ sind beispielsweise solche der allgemeinen Formeln (7a), (7b) und (7c)

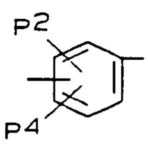 (7a)

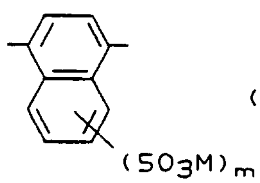 (7b)

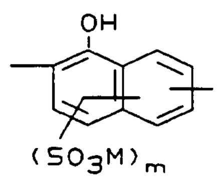 (7c)

in welchen

- $P^2$, M und m: die oben angegebenen Bedeutungen haben und
- $P^4$: Wasserstoff, Alkyl von 1 bis 4 C-Atomen, wie Methyl oder Ethyl, Alkoxy von 1 bis 4 C-Atomen, wie Methoxy und Ethoxy, Chlor, Alkanoylamino von 2 bis 5 C-Atomen, wie Acetylamino und Propionylamino, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist.

Verbindungen der allgemeinen Formel H-E-$NH_2$ sind beispielsweise Anilin, 3-Methylanilin, 3-Chloranilin, 2,5-Dimethylanilin, 2,5-Dimethoxyanilin, 3-Methoxyanilin, 3-Methyl-6-methoxy-anilin, 3-Aminophenylharnstoff, 3-Acetylamino-6-methyl-anilin, 2-Amino-4-acetyl-aminobenzol-1-sulfonsäure, 1-Amino-naphthalin, 1-Amino-naphthalin-6-oder -7- oder -8-sulfon-säure, 3-Acetylaminoanilin, 2-Methylanilin, 2-Methoxyanilin, 3-Benzoylamino-anilin, 2,3-Dimethylanilin, 3,5-Dimethyl-anilin, 1-Amino-2-methoxy-5-acetylamino-benzol, 3-Propionylamino-anilin, 3-Butyrylamino-anilin, 2-Sulfo-5-acetylamino-anilin, 2-Amino-5-naphthol-7-sulfonsäure und 2-Amino-8-naphthol-6-sulfonsäure.

Die Reste K der Kupplungskomponente entstammen vorzugsweise der Anilin-, Naphthalin-, Pyrazol- und Acylacetarylid-Reihe; sie können faserreaktive Gruppen besitzen.

Kupplungskomponenten der Formel H-K der Anilin- und Naphthalinreihe sind beispielsweise die Aniline, N-mono- und N,N-disubstituierte Aniline, m-Phenylendiamine und deren Derivate, Naphtholsulfonsäuren, Aminonaphthaline, Naphthole, Hydroxynaphthoesäurederivate, Aminonaphthalinsulfonsäuren oder Aminonaphtholsulfonsäuren.

Kupplungskomponenten der Formel H-K-$(SO_2\text{-}Y)_p$ sind beispielsweise Verbindungen der allgemeinen Formeln (8a) bis (8f)

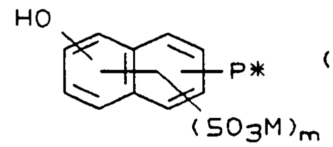
(Ba)

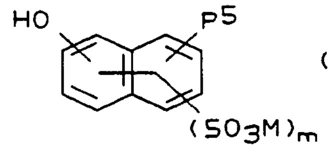
(Bb)

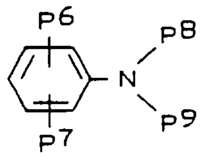
(Bc)

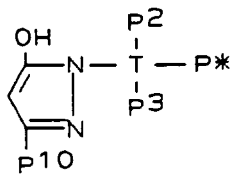
(Bd)

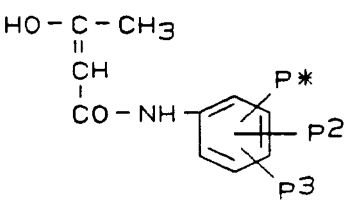
(Be)

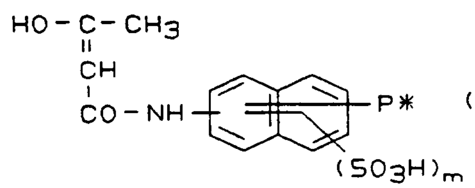
(Bf)

ist, in welchen

- $P^2$, $P^3$, m und M — die obengenannten Bedeutungen haben,
- $P^*$ — ein Rest der Formel $(-SO_2Y)_p$ mit Y und p der obengenannten, insbesondere bevorzugten Bedeutung ist oder ein Rest der Formel (5b)

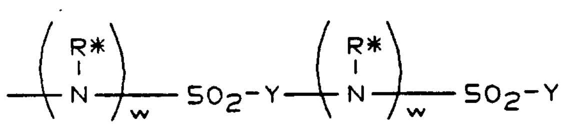
(5b)

in welcher

- $R^*$ — Methyl oder Ethyl ist,
- w — die Zahl Null oder 1 bedeutet und
- Y — die obige Bedeutung besitzt,
- $P^5$ — Phenylureido ist, das im Phenylrest durch Chlor, Methyl, Methoxy, Sulfo und/oder Carboxy und durch eine Gruppe $-SO_2-Y$ mit Y der obigen Bedeutung substituiert ist, oder Benzoylamino ist, das im Benzolrest durch Chlor, Methyl, Methoxy, Nitro, Sulfo und/oder Carboxy und durch eine Gruppe $-SO_2-Y$ mit Y der obigen Bedeutung substituiert ist,
- $P^6$ — Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist,
- $P^7$ — Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, Ureido oder Phenylureido ist,
- $P^8$ — Wasserstoff oder Alkyl von 1 bis 4 C-Atomen ist, das durch Hydroxy, Cyan, Carboxy, Sulfo, Sulfato, Methoxycarbonyl, Ethoxycarbonyl oder Acetoxy oder eine Gruppe $-SO_2-Y$ obiger Definition substituiert sein kann,
- $P^9$ — Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann, und durch eine Gruppe $-SO_2-Y$ obiger Definition substituiert ist, oder Benzyl oder Phenyl oder durch Alkyl von 1 bis 4 C-Atomen, Alkoxy von 1 bis 4 C-Atomen, Chlor und/oder Sulfo substituiertes Phenyl ist, wobei der Phenylrest durch eine Gruppe $-SO_2-Y$ obiger Definition substiuiert ist,

$P^{10}$ Wasserstoff, Alkyl von, 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy, ist, und

T für einen Benzol- oder Naphthalinring, bevorzugt Benzolring, steht.

Verbindungen der allgemeinen Formeln (8) sind beispielsweise 1-[3'-(β-Chlor-ethylsulfonyl)-benzoylamino]-3,6-disulfo-8-naphthol, 1-[3'-(Vinylsulfonyl)-benzoylamino]-3,6-disulfo-8-naphthol, 1-[3'-(Vinylsulfonyl)-benzoylamino]-4,6-disulfo-8-naphthol, 1-[3'-(β-Sulfatoethylsulfonyl)-benzoylamino]-4,6-disulfo-8-naphthol, 2-[3'-(β-Chlorethylsulfonyl)-benzoylamino]-6-sulfo-8-naphthol, 2-[3'-(Vinylsulfonyl)-benzoylamino]-6-sulfo-8-naphthol, 3-[3'-(β-Chlorethylsulfonyl)-benzoyl-amino]-6-sulfo-8-naphthol, 3-[3'-(Vinylsulfonyl)-benzoylamino]-6-sulfo-8-naphthol, 2-[N-Methyl-N-(β-sulfatoethylsulfonyl)-amino]-6-sulfo-8-naphthol, 3-[N-Methyl-N-(β-sulfatoethylsulfonyl)-amino]-6-sulfo-8-naphthol, 2-[N-Ethyl-N-(β-sulfatoethylsulfonyl)-amino]-6-sulfo-8-naphthol, 1-[N'-(3'-β-Chlorethylsulfonyl-phenyl)-ureido]-3,6-disulfo-8-naphthol, 1-[N'-(3'-Vinylsulfonyl-phenyl)-ureido]-3,6-disulfo-8-naphthol, 1-[N'-(3'-Vinylsulfonyl-propyl)-ureido]-3,6-disulfo-8-naphthol, 1-[N'-(3'-β-Chlorethylsulfonyl-phenyl)-ureido]-4,6-disulfo-8-naphthol, 1-[N'-(3'-Vinylsulfonylphenyl)-ureido]-4,6-disulfo-8-naphthol, 1-[N'-(3'-β-Chlorethylsulfonyl-propyl)-ureido]-4,6-disulfo-8-naphthol, 2-[N'-(3'-β-Sulfatoethylsulfonyl-phenyl)-ureido]-6-sulfo-8-naphthol, 2-[N'-(3'-β-Chlor-ethylsulfonyl-propyl)-ureido]-6-sulfo-8-naphthol, 3-[N'-(3'-β-Chlorethylsulfonylphenyl)-ureido]-6-sulfo-8-naphthol, 3-[N'-(3'-Vinylsulfonylpropyl)-ureido]-6-sulfo-8-naphthol,1-[4'-(β-Sulfatoethyl sulfonyl)-2'-sulfo-phenyl]-3-methyl-pyrazol-5-on, 1-[4'-(β-Sulfatoethylsulfonyl)-phenyl]-3-carboxy-pyrazol-5-on, 1-[4'-(β-Sulfatoethylsulfonyl)-phenyl]-3-methyl-pyrazol-5-on, 1-[3'-(β-Sulfatoethylsulfonyl)-phenyl]-3-carboxy-pyrazol-5-on, 1-[3'-(β-Sulfatoethylsulfonyl)-phenyl]-3-methyl-pyrazol-5-on, 1-(4'-Sulfophenyl)-3-carboxy-pyrazol-5-on, 1-(4'-β-Sulfatoethylsulfonyl-phenyl)-3-carbomethoxy-5-pyrazolon, 1-(3'-β-Sulfatoethylsulfonyl-phenyl)-3-carbomethoxy-5-pyrazolon, 4-Hydroxy-6-[N-methyl-N-(β-sulfatoethylsulfonyl)-amino]-naphthalin-2-sulfonsäure, 4-Hydroxy-6-[N-ethyl-N-(β-sulfatoethylsulfonyl)-amino]-naphthalin-2-sulfonsäure, 4-Hydroxy-7-[N-methyl-N-(β-sulfatoethylsulfonyl)-amino]-naphthalin-2-sulfonsäure, 4-Hydroxy-7-[N-ethyl-N-(β-sulfatoethylsulfonyl)-amino]-naphthalin-2-sulfonsäure und Acetoacetyl-(4-β-sulfatoethylsulfonyl)-anilin.

Als Kupplungskomponenten H-K sind weiterhin besonders zu nennen: 1-Amino-8-hydroxynaphthalin-3,6- und 4,6-disulfonsäure sowie deren durch saure Kupplung erhaltene Arylazokupplungsprodukte der Formel (9a)

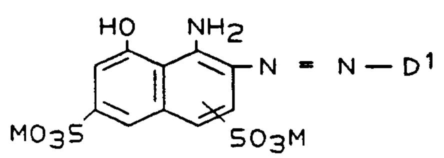

(9a)

in welcher

$D^1$ ein Rest der Formel (10a), (10b) oder (10c)

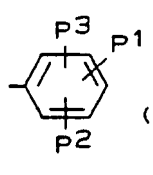

(10a)

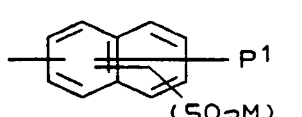

(10b)

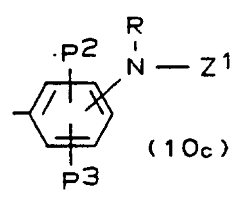

(10c)

ist, worin R, $P^1$, $P^2$, $P^3$, m und M die oben angegebenen Bedeutungen haben und $Z^1$ ein Rest der nachstehend angegebenen allgemeinen Formel (3a) ist.

Kupplungskomponenten, die erfindungsgemäß die faserreaktive Gruppe der Formel (3) enthalten bzw. in die die faserreaktive Gruppe, gegebenenfalls erst nach der Kupplungsreaktion, eingeführt werden kann, sind beispielsweise Verbindungen der allgemeinen Formeln (11a) bis (11h) bzw. deren $Z^1$-freien Vorprodukte (d.h. Verbindungen die statt der Gruppe -N(R)-$Z^1$ die Gruppe -N(R)-H enthalten):

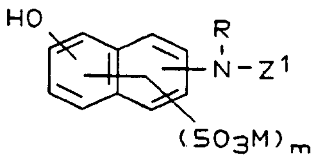

(11 a)

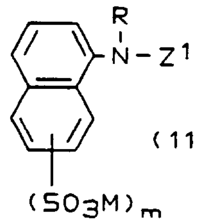

(11 b)

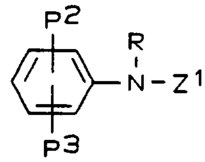

(11 c)

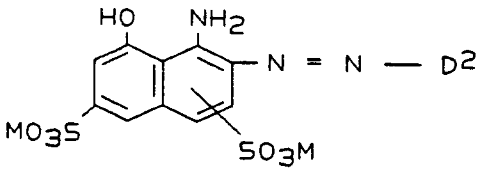

(11 d)

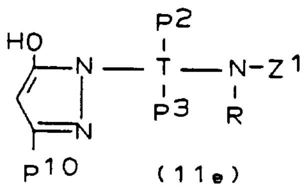

(11 e)

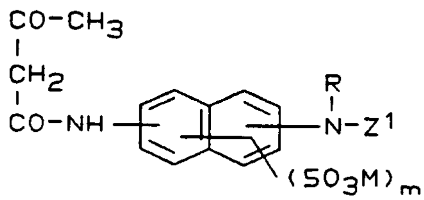

(11 f)

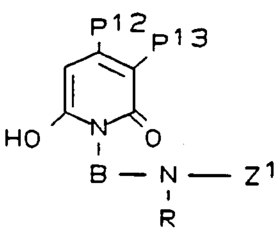

(11 g)

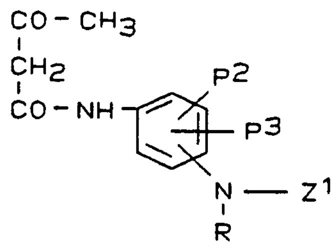

(11 h)

in welchen

| | |
|---|---|
| R, $P^2$, $P^3$, $P^{10}$, $P^{12}$, $P^{13}$, $D^2$, M, m und T | die oben angegebenen, insbesondere bevorzugten Bedeutungen haben, |
| $D^2$ | ein Rest der obengenannten allgemeinen Formel (10c) ist, |
| B | Alkyl von 1 bis 4 C-Atomen, Benzyl oder Phenethyl oder Phenyl oder im Benzolrest durch Fluor, Chlor, Brom, Methyl, Methoxy, Cyano, Sulfo, Carboxy, Acetyl, Nitro, Carbamoyl und/oder Sulfamoyl substituiertes Benzyl, Phenethyl oder Phenyl ist, wobei im Falle von "Benzyl" und "Phenethyl" die Gruppe $-N(R^x)-Z^1$ an den Benzolkern gebunden ist, und |
| $Z^1$ | eine Gruppe der allgemeinen Formel (3a) |

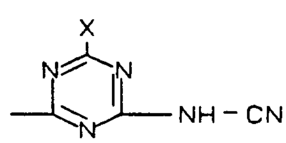

(3a)

mit X einer der obengenannten Bedeutungen ist.

Solche Kupplungskomponenten, die eine Gruppe entsprechend der oben definierten allgemeinen Formel -NHR oder deren Alkanoyl-Derivat, deren Alkanoylgruppe gegebenenfalls oder erforderlichenfalls anschließend hydrolytisch abgespalten wird, besitzen, sind beispielsweise:

Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetyl-aminobenzol-1-sulfonsäure, 1-Aminonaphthalin, 1-Aminonaphthalin-6- oder -7- oder -8-sulfonsäure, 3-Acetylamino-anilin, 2-Methylanilin, 2-Methoxyanilin, 3-Benzoylamino-anilin, 2,3-Dimethylanilin, 3,5-Dimethylanilin, 1-Amino-2-methoxy-5-acetylamino-benzol, 4-(Phenyl-azo)-anilin, 3-Propionylamino-anilin, 3-Butyrylaminoanilin, 2-Sulfo-5-acetylamino-anilin, 2-Amino-5-naphthol-7-sulfonsäure, 2-Amino-8-naphthol-6-sulfonsäure, 6-Methylamino-3-sulfo-1-naphthol, 1-Amino-3,6- oder -4,6-disulfo-8-naphthol, 6-Amino-3,5-disulfo-1-naphthol, 6-(4'-Aminophenyl)-amino-3-sulfo-1-naphthol, 1-Amino-2,4-disulfo-8-naphthol, 1-(4'-Amino-benzolyamino)-3,6-disulfo-8-naphthol, 1-(3'-Amino-benzoylamino)-3,6-disulfo-8-naphthol, 1-(4'-Amino-2'-sulfo-phenyl)-3-carboxy-5-pyrazolon, 1-(4'-Amino-2'-sulfo-phenyl)-3-methyl-5-pyrazolon, 1-(3'-Sulfo-6'-methyl-5'-amino-phenyl)-3-carboxy-5-pyrazolon, 1-{4'-[N'-(4''-sulfo-3''-amino-phenyl)-carbamoyl]-phenyl}-3-methyl- oder -3-carboxy-5-pyrazolon, N-(3,5-Disulfo-4-amino)-acetoacetylanilid, N-(3-Sulfo-4-amino-6-methoxy)-acetoacetylanilid, 2-Hydroxy-5-carbamoyl-4-methyl-1-($\beta$-amino-ethyl)-6-pyridon und 2-Hydroxy-5-sulfomethyl-4-methyl-1-($\beta$-aminoethyl)-6-pyridon, 1-Amino-8-hydroxynaphthalin-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-diSulfonsäure, 1-Amino-8-hydroxynaphalin-2,4,6-trisulfonsäure, 1-Hydroxy-8-acetylamino-naphthalin-3-sulfonsäure, 2-Amino-5-hydroxynaphthalin-7-sulfonsäure, 2-Methyl- und 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methylamino- oder 2-Ethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- oder -4,6-disulfonsäure, 1-Acetylamino-8-hydroxynaphthalin-3,6- oder -4,6-disulfonsäure, 2-(4'-Amino-3'-sulfophenylamino)-5-hydroxynaphthalin-7-sulfonsäure, 1-(3'-Aminophenyl)-3-methyl-5-pyrazolon, 2,4,6-Triamino-3-cyanpyridin, 1-Amino-8-hydroxy-2-(4'-sulfophenylazo)-naphthalin-3,6-disulfonsäure, 1-Amino-8-hydroxy-2-(2',5'-disulfonphenylazo)-naphthalin-3,6-disulfonsäure, 1-($\beta$-Aminoethyl)-3-cyan-4-methyl-6-hydroxy-2-pyridon,1-($\gamma$-Aminopropyl)-3-sulfomethyl-4-methyl-6-hydroxy-2-pyridon, 1,3-Diaminobenzol, 1-Amino-3-N,N-di-($\beta$-hydroxyethyl)-aminobenzol, 1-Amino-3-N,N-di-($\beta$-sulfatoethyl)-aminobenzol, 1-Amino-3-N,N-di-($\beta$-hydroxyethyl)-amino-4-methoxybenzol, 1-Amino-3-N,N-di-($\beta$-sulfatoethyl)-amino-4-methoxybenzol, 1-Amino-3-sulfo-benzylamino-benzol, 1-Amino-3-sulfobenzylamino-4-chlorbenzol, 1-Amino-3-N,N-di-(sulfobenzyl)-aminobenzol.

Aromatische Diamine aus dem Rest der Formel (10c) sind beispielsweise solche, die der obengenannten Formel (4c) entsprechen und dort beispielsweise einzeln genannt sind.

Die Verbindungen der allgemeinen Formeln (11b) und (11c) können selbst als Kupplungskomponenten nicht eingesetzt werden. Als Kupplungskomponenten zur Synthese der erfindungsgemäßen Azofarbstoffe dienen deren $Z^1$-freien Vorprodukte, d.h. deren Vorprodukte, die anstelle der Gruppe $-N(R)-Z^1$ eine Aminogruppe der Formel -N(R)-H enthalten. Nach Kupplung dieser aminogruppenhaltigen Vorprodukte mit einer entsprechenden Diazokomponente zur Azoverbindung kann der faserreaktive Rest $Z^1$ durch Umsetzung mit einer Verbindung der allgemeinen Formel $Hal-Z^1$ , in welcher Hal ein Halogenatom, bevorzugt ein Fluor- oder Chloratom, darstellt und $Z^1$ die obengenannte Bedeutung besitzt, in die Aminogruppe -N(R)-H eingeführt werden. Analog können auch die $Z^1$-freien Aminoverbindungen der Verbindungen der allgemeinen Formeln (11a) und (11d) bis (11h) selbst zunächst als Kupplungskomponenten zur Herstellung einer Amino-Azo-Ausgangsverbindung dienen, in die sodann der faserreaktive Rest in gleicher Weise eingeführt werden kann. Die Kupplungskomponenten mit dem faserreaktiven Rest $Z^1$ der allgemeinen Formeln (11a) und (11d) bis (11h) selbst lassen sich ebenso durch Umsetzung dieser $Z^1$-freien, aminogruppenhaltigen Ausgangsverbindungen mit einer Verbindung der Formel $Hal-Z^1$ analog bekannter Verfahrensweisen herstellen.

Anstelle des Restes $Z^1$ können auch andere, bekannte faserreaktive Reste in die Aminogruppen der aminogruppenhaltigen Kupplungskomponenten oder deren Amino-Azo-Ausgangsverbindungen eingeführt werden, sofern solche erfindungsgemäßen Azofarbstoffe hergestellt werden sollen, in welchen die Diazokomponente die erfindungsgemäße faserreaktive Gruppierung Z besetzt. Prinzipiell kommen hierfür alle bekannten faserreaktiven Acylierungsmittel in Betracht.

Reste K in den allgemeinen Formeln (2a) und (2b), die eine faserreaktive Gruppe $-SO_2-Y$ enthalten, sind insbesondere Reste der allgemeinen Formeln (12a) bis (12h)

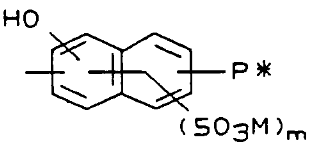
(12a)

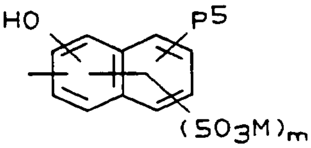
(12b)

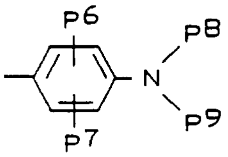
(12c)

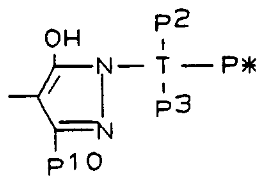
(12d)

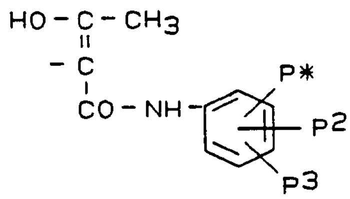
(12f)

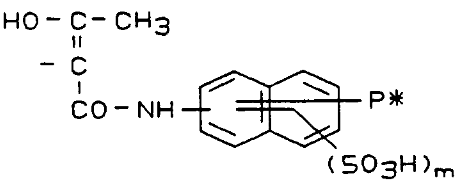
(12g)

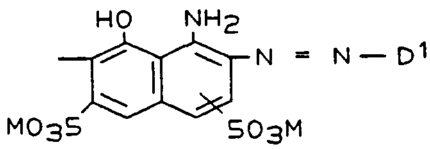
(12h)

in welchen die einzelnen Formelglieder die obengenannten Bedeutungen haben.

Reste K in der allgemeinen Formel (2a) und (2f), die die Gruppe Z enthalten, sind insbesondere Reste der allgemeinen Formeln (12j) bis (12p)

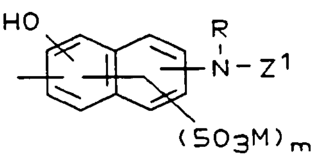
(12j)

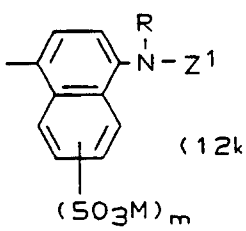
(12k)

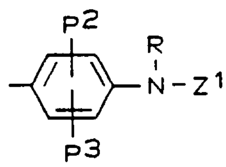
(12m)

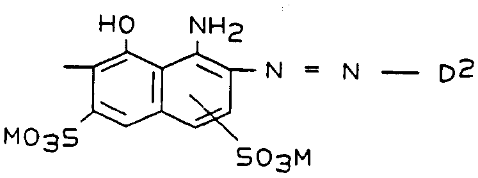
(12n)

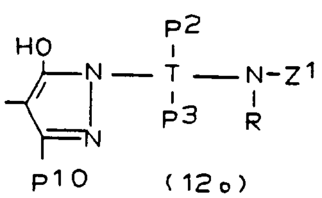
(12o)

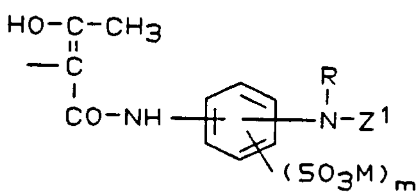
(12p)

in welchen die einzelnen Formelglieder die obengenannten Bedeutungen haben.

Reste K in der allgemeinen Formel (2f) mit einem metallkomplex-bindenden Sauerstoffatom, die eine faserreaktive Gruppe $-SO_2-Y$ oder Z enthalten (bei v = Null), sind insbesondere solche der Formeln (13a) bis (13f)

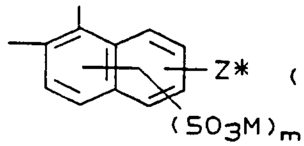 (13a)

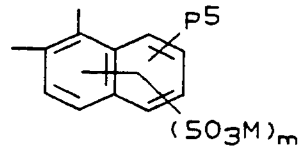 (13b)

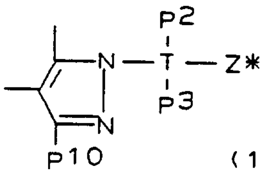 (13c)

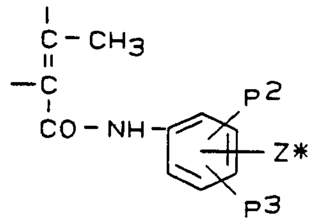 (13d)

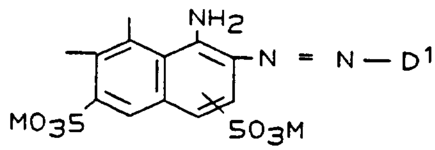 (13e)

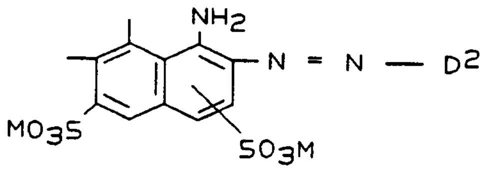 (13f)

in welchen $Z^*$ eine der Bedeutungen von $P^1$ oder Z besitzt und die einzelnen Formelglieder eine der obengenannten Bedeutungen haben.

Reste K in der allgemeinen Formel (2f) mit einem metallkomplex-bindenen Sauerstoffatom im Falle von v = 1 sind insbesondere solche der Formeln (13 g) und (13h)

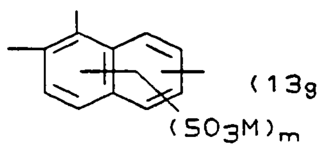 (13g)

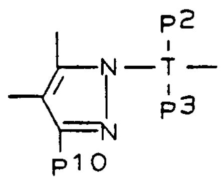 (13h)

in welchen die einzelnen Formelglieder eine der obengenannten Bedeutungen haben.

Halogentriazinverbindungen entsprechend der allgemeinen Formel (13) sind beispielsweise 2,4,6-Trichlor-1,3,5-triazin (Cyanurchlorid), 2,4,6-Tribrom-1,3,5-triazin (Cyanurbromid), 2-Methylsulfonyl-4,6-dichlor-1,3,5-triazin und 2-Phenylsulfonyl-4,6-dichlor-1,3,5-triazin.

In allen obigen Formeln können die einzelnen Formelglieder, sowohl verschiedener als auch gleicher Bezeichnung innerhalb einer allgemeinen Formel, im Rahmen ihrer Bedeutung zueinander gleiche und voneinander verschiedene Bedeutungen haben.

Die erfindungsgemäßen Farbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe der Formel (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die erfindungsgemäßen Farbstoffe lassen sich auf verschiedene Weise auf das Fasermaterial applizieren und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Besonders geeignet sind die erfindungsgemäßen Farbstoffe für das sogenannte Kaltverweilverfahren, wonach der Farbstoff zusammen mit dem Alkali auf dem Foulard aufgebracht und danach durch mehrstündiges Lagern bei Raumtemperatur fixiert wird. Nach dem Fixieren werden die Färbungen oder Drucke mit kaltem und heißem Wasser, gegebenenfalls unter Zusatz eines dispergierend wirkenden und die Diffusion der nicht fixierten Anteile fördernden Mittels, gründlich gespült.

Gegenstand der vorliegenden Erfindung ist deshalb auch die Verwendung der erfindungsgemäßen Verbindungen der allgemeinen Formel (1) zum Färben (einschließlich des Bedruckens) diese Materialien bzw. Verfahren zum Färben (und Bedrucken) solcher Materialien in an und für sich üblicher Verfahrensweise, bei welchen eine Verbindung der allgemeinen Formel (1) als Farbmittel eingesetzt wird, indem man die Verbindung der allgemeinen Formel (1) im wäßrigen Medium auf das Material appliziert und es in der Wärme oder mittels einer alkalisch wirkenden Verbindung oder mittels beidem auf dem Material fixiert.

Die Farbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist.

Die Farbstoffe der Formel (1) eignen sich auch besonders zum Druck, vor allem auf Baumwolle, ebenso aber auch zum Bedrucken von Stickstoffhaltigen Fasern, z.B. von Wolle oder Seide oder von Mischgeweben, die Wolle oder Seide enthalten.

Die mit den erfindungsgemäßen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Licht echtheit und sehr gute Naßechtheitseigenschaften, wie Wasch-, Wasser-, Seewasser-, Ueberfärbe und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet.

Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

**Beispiel 1**

Zu einer feinverteilten Suspenion von 19 Teilen Cyanurchlorid in 200 Teilen Eiswasser gibt man 4,25 Teile Cyanamid, stellt mittels Natronlauge einen pH-Wert von 8,5 bis 9 ein und rührt noch etwa 1 Stunde bei 0 bis 3°C und einem pH-Wert von 8,5. Die entstandene Lösung wird nach beendeter Kondensationsreaktion (dünnschichtchromatographisch prüfbar) mittels Salzsäure auf einen PH-Wert von 5 gestellt. 23,9 Teile 4-Hydroxy-7-amino-naphthalin-2-sulfonsäure werden hinzugegeben, und der Ansatz wird noch etwa 2 Stunden bei 20°C und einem pH-Wert von 3 bis 3,5 weitergerührt. Danach gibt man eine auf üblichem Wege hergestellte schwefelsaure, wäßrige Suspension (etwa 320 Teile) des Diazoniumsalzes von 41,1 Teilen 2-Amino-8-(β-sulfatoethylsulfonyl)-naphthalin-6-sulfonsäure hinzu und führt die Kupplungsreaktion bei einer Temperatur von 10 bis 25°C und einem pH-Wert von 6 bis 6,5 durch. Man klärt die Syntheselösung nach Einstellung eines pH-Wertes von 5,5 und Zugabe von Kieselgur bei 40 bis 50°C durch Filtration und dampft das Filtrat unter reduziertem Druck bei 50°C zur Trockne ein.

Man erhält ein rotes, elektrolythaltiges Pulver des erfindungsgemäßen Alkalimetallsalzes (Natriumsalzes) der Verbindung der Formel

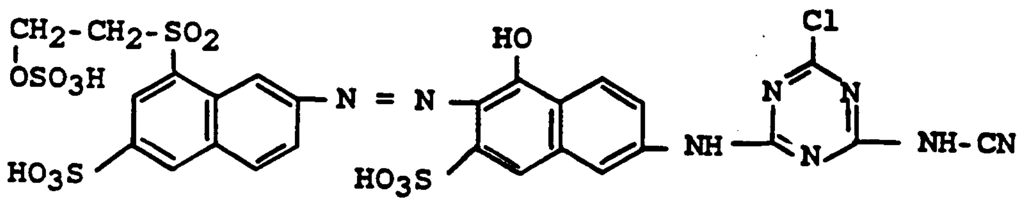

($\lambda_{max}$ = 491 nm).

Die erfindungsgemäße Verbindung besitzt sehr gute faserreaktive Farbstoffeigenschaften und färbt die in der Beschreibung genannten Materialien, wie insbesondere Cellulosefasermaterialien, beispielsweise Baumwolle, nach den in der Technik für faserresktive Farbstoffe üblichen Applikations- und Fixierverfahren in farbstarken, brillanten orangen Tönen mit guten Echtheitseigenschaften, von denen insbesondere die guten Wasser-, Wasch-, Schweiß-, Hypochloritbleich- und Bügelechtheiten hervorgehoben werden können.

**Beispiel 2**

Zu einer feinverteilten Suspension von 19 Teilen Cyanurchlorid in 200 Teilen Eiswasser gibt man 31,9 Teile 4-Hydroxy-5-amino-naphthalin-2,7-disulfonsäure und führt die Kondensationsreaktion zunächst während etwa 3 Stunden bei 0 bis 5 °C und einem pH-Wert von 1,8 bis 2,2 und danach noch etwa 1 Stunde bei 0 bis 20 °C und einem pH-Wert von 4,5 durch. Anschließend gibt man 4,25 Teile Cyanamid hinzu, stellt mittels wäßriger Natronlauge einen pH-Wert von 10 ein, erwärmt den Ansatz langsam auf 50 bis 60 °C und rührt noch etwa 2 Stunden bei dieser Temperatur und bei einem pH-Wert von 9,5 bis 10 weiter, bis die Reaktion beendet ist. Danach stellt man mittels Salzsäure einen pH-Wert von 5 ein, gibt sodann eine auf üblichem Wege hergestellte schwefelsaure wäßrige Suspension (etwa 340 Teile) des Diazoniumsalzes von 28,1 Teilen 4-($\beta$-Sulfatoethylsulfonyl)-anilin hinzu und führt die Kupplungsreaktion bei 10 bis 15 °C und einem pH-Wert von 4,5 durch. Man versetzt anschließend die Syntheselösung mit Kieselgur, erwärmt sie auf 40 bis 50 °C, stellt einen pH-Wert von 5,5 ein, filtriert und isoliert die erfindungsgemäße Azoverbindung durch Eindampfen des Filtrates unter reduziertem Druck.

Die als Alkalimetallsalz (Natriumsalz) isolierte erfindungsgemäße Azoverbindung besitzt, in Form der freien Säure geschrieben, die Formel

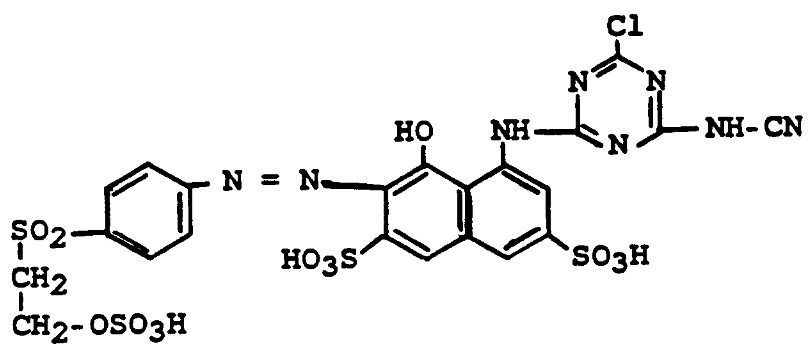

($\lambda_{max}$ = 517 nm).

Sie liefert nach den in der Technik üblichen Applikations- und und Fixierverfahren für faserreaktive Farbstoffe beispielsweise auf Baumwolle farbstarke, rote Färbungen und Drucke mit guten Echtheitseigenschaften, von denen insbesondere die guten Wasch-, Schweiß-, Wasser- und Bügelechtheiten hervorgehoben werden können.

**Beispiel 3**

66,1 Teile 3-[1'-Sulfo-6'-($\beta$-hydroxyethylsulfonyl)-2'-naphthyl-azo]-4-hydroxy-5-amino-naphthalin-2,7-disulfonsäure werden in wäßriger Lösung bei einer Temperatur von 0 bis 5 °C und einem pH-Wert von 4 mit 19 Teilen Cyanurchlorid umgesetzt. Anschließend gibt man 4,3 Teile Cyanamid hinzu und führt die zweite Kondensationsreaktion unter stetiger Erhöhung des pH-Wertes auf 10 mittels wäßriger Natronlauge und der

Temperatur auf 50 bis 60 °C und danach noch während etwa 2 Stunden bei dieser Temperatur und einem pH-Wert von 9,5 bis 10 durch. Die gebildete Azoverbindung mit der β-Hydroxyethylsulfonyl-Gruppe wird aus der Syntheselösung bei einem pH-Wert von 7 mittels Kaliumchlorid ausgesalzen, isoliert und getrocknet.

10 Teile des erhaltenen Produktes mit einem Gehalt von etwa 70% an der Azoverbindung werden in 20 Teilen 100 %iger Schwefelsäure bei 5 bis 10 °C eingetragen. Nach vollständiger Lösung der Azoverbindung wird der Ansatz auf 80 Teile Eis gegossen, die Mischung mit Calciumcarbonat neutralisiert, vom Calciumsulfat abgesaugt, der Rückstand mit Wasser nachgewaschen und das Filtrat unter reduziertem Druck zur Trockne eingedampft.

Die als Alkalimetallsalz erhaltene erfindungsgemäße Azoverbindung der Formel (in Form der freien Säure geschrieben)

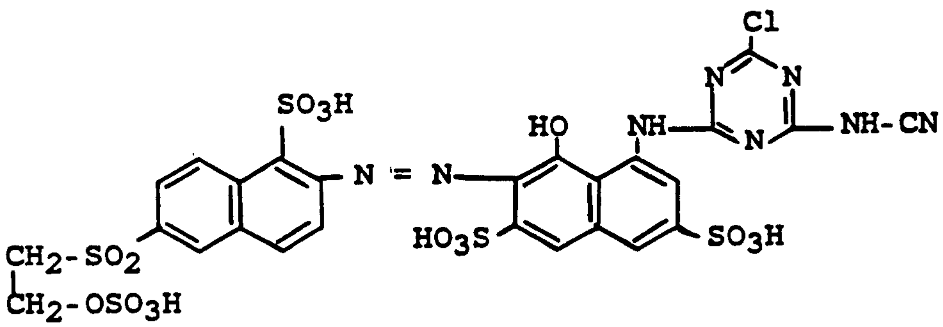

($\lambda_{max}$ = 538 nm).

färbt nach den in der Technik üblichen Applikationsverfahren für faserreaktive Farbstoffe die in der Beschreibung genannten Materialien, wie insbesondere Baumwolle, in farbstarken brillanten, blaustichig roten Tönen mit guten Echtheitseigenschaften, von denen insbesondere die gute Tageslichtechtheit und die gute Bügelechtheit hervorgehoben werden können.

**Beispiele 4 bis 56**

In den nachfolgenden Tabellenbeispielen sind weitere erfindungsgemäße Azofarbstoffe entsprechend einer allgemeinen Formel (A)

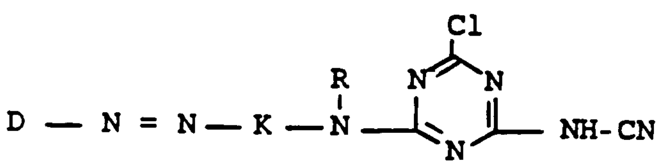

(A)

mit Hilfe der Formelreste der allgemeinen Formel (A) beschrieben. Sie lassen sich in erfindungsgemäßer Weise, beispielsweise analog den obigen Ausführungsbeispielen, unter Einsatz der aus der allgemeinen Formel (A) ersichtlichen Ausgangskomponenten (beispielsweise der Diazokomponente D-$NH_2$, der Kupplungskomponente H-K-NHR, Cyanurchlorid und Cyanamid) herstellen. Sie besitzen sehr gute faserreaktive Farbstoffeigenschaften und färben die in der Beschreibung genannten Materialien, wie insbesondere Cellulosefasermaterialien, beispielsweise Baumwolle, nach den in der Technik für faserreaktive Farbstoffe üblichen Applikations- und Fixierverfahren in farbstarken, in dem jeweiligen Tabellenbeispiel angegebenen Farbtönen (hier auch Baumwolle) mit guten Echtheitseigenschaften.

| Bsp. | Rest D- | Rest -K-N(R)- | Farbton |
|---|---|---|---|
| 4 | 4-(ß-Sulfatoethyl-sulfonyl)-phenyl | 3-Amino-4-sulfo-phen-ylen(6,1)-1-amino | goldgelb |
| 5 | 3-(ß-Sulfatoethyl sulfonyl)-phenyl | dito | goldgelb |
| 6 | 6-(ß-Sulfatoethyl-sulfonyl)-1-sulfo-naphth-2-yl | dito | goldgelb |
| 7 | 2-Sulfo-4-(ß-sulfato-ethylsulfonyl)-phenyl | dito | goldgelb |

| Bsp. | Rest D- | Rest -K-N(R)- | Farbton |
|---|---|---|---|
| 8 | 8-(ß-Sulfatoethyl-sulfonyl)-6-sulfo-naphth-2-yl | dito | goldgelb |
| 9 | dito | 3-Ureido-phen-ylen(4,1)-1-amino | rotstichig gelb |
| 10 | dito | 3-Acetylamino-phen-ylen(4,1)-1-amino | dito |
| 11 | dito | 3-Methyl-phen-ylen(4,1)-1-amino | dito |
| 12 | 6-(ß-Sulfatoethyl-sulfonyl)-1-sulfo-naphth-2-yl | 3-Methyl-phen-ylen(4,1)-1-amino | rotstichig gelb |
| 13 | dito | 3-Acetylamino-phen-ylen(4,1)-1-amino | dito |
| 14 | dito | 3-Ureido-phen-ylen(4,1)-1-amino | dito |
| 15 | 6-Vinylsulfonyl-1-sulfo-naphth-2-yl | 3-Acetylamino-phen-ylen(4,1)-1-amino | dito |
| 16 | 4-(ß-Sulfatoethyl-sulfonyl)-phenyl | 3-Carboxy-pyrazol-5-on-4-yl-1-[2'-sulfo-phenylen(1',4')-4'-amino] | gelb |

| Bsp. | Rest D- | Rest -K-N(R)- | Farbton |
|---|---|---|---|
| 17 | 2-Sulfo-4-(ß-sulfato-ethylsulfonyl)-phenyl | dito | gelb |
| 18 | 6-(ß-Sulfatoethyl-sulfonyl)-1-sulfo-naphth-2-yl | dito | gelb |
| 19 | 8-(ß-Sulfatoethyl-sulfonyl)-6-sulfo-naphth-2-yl | dito | gelb |
| 20 | 2-Methoxy-4-(ß-sulfato-ethylsulfonyl)-5-methyl-phenyl | dito | gelb |
| 21 | 2,5-Dimethoxy-4-(ß-sulfatoethylsulfonyl)-phenyl | dito | goldgelb |
| 22 | 4-N-[3'-(ß-Sulfatoethyl-sulfonyl)-phenyl]amido-carbonyl-phenyl | dito | gelb |
| 23 | 1:1-Kupferkomplex von: 2-Hydroxy-6-(ß-sulfato-ethylsulfonyl)-phenyl | dito | gelbstichig braun |
| 24 | 4-(ß-Sulfatoethylsul-fonyl)-phenyl | 3-Methylpyrazol-5-on-4-yl-1-[2'-sulfo-phenylen(1',4')-4'-amino] | gelb |

| Bsp. | Rest D- | Rest -K-N(R)- | Farbton |
|---|---|---|---|
| 25 | 2,5-Dimethoxy-4-(β-sulfatoethylsulfonyl)-phenyl | 3-Methyl-pyrazol-5-on-4-yl-1-[2'-sulfo-phenylen(1',4')-4'-amino] | goldgelb |
| 26 | 1:1-Kupferkomplex von: 2-Hydroxy-5-(β-sulfato-ethylsulfonyl)-phenyl | dito | gelbst. braun |
| 27 | 4-(β-Sulfatoethyl-sulfonyl)-phenyl | 4-Hydroxy-2-sulfo-naphth-ylen(3,6)-6-amino | orange |
| 28 | 3-(β-Sulfatoethyl-sulfonyl)-phenyl | dito | orange |
| 29 | 4-Methoxy-3-(β-sulfato-ethylsulfonyl)-phenyl | dito | rot |
| 30 | 2-Methoxy-5-(β-sulfato-ethylsulfonyl)-phenyl | dito | rot |
| 31 | 4-(β-Sulfatoethyl-sulfonyl)-phenyl | 4-Hydroxy-2-sulfo-naphth-ylen(3,7)-7-amino | orange |
| 32 | 6-(β-Sulfatoethyl-sulfonyl)-1-sulfo-naphth-2-yl | dito | orange |
| 33 | 8-(β-Sulfatoethyl-sulfonyl)-6-sulfo-naphth-2-yl | dito | orange |

| Bsp. | Rest D- | Rest -K-N(R)- | Farbton |
|---|---|---|---|
| 34 | 4-Methoxy-3-(ß-sulfato-ethylsulfonyl)-phenyl | dito | scharlach |
| 35 | 2-Methoxy-5-(ß-sulfato-ethylsulfonyl)-phenyl | dito | scharlach |
| 36 | 2-Sulfo-4-(ß-sulfato-ethylsulfonyl)-phenyl | dito | orange |
| 37 | 1:1-Kupferkomplex von: 2-Hydroxy-5-(ß-sulfato-ethylsulfonyl)-phenyl | dito | rubin |
| 38 | 4-(ß-Sulfatoethylsul-fonyl)-phenyl | 4-Hydroxy-2,8-disulfo-naphth-ylen(3,5)-5-amino | gelbst. rot |
| 39 | 3-(ß-Sulfatoethyl-sulfonyl)-phenyl | 4-Hydroxy-2,7-disulfo-naphth-ylen(3,5)-5-amino | rot |
| 40 | 2-Sulfo-4-(ß-sulfato-ethylsulfonyl)-phenyl | dito | gelbst. rot |
| 41 | 4-N-[3'-(ß-Sulfatoethyl-sulfonyl)-phenyl]amido-carbonyl-phenyl | dito | rot |
| 42 | 2-Methoxy-5-(ß-sulfato-ethylsulfonyl)-phenyl | dito | blaust. rot |
| 43 | 8-(ß-Sulfatoethylsulfo-nyl)-naphth-2-yl | dito | dito |

| Bsp. | Rest D- | Rest -K-N(R)- | Farbton |
|---|---|---|---|
| 44 | 6-(ß-Sulfatoethylsulfonyl)-1-sulfo-naphth-2-yl | dito | dito |
| 45 | 8-(ß-Sulfatoethylsulfonyl)-6-sulfo-naphth-2-yl | dito | dito |
| 46 | 1:1-Kupferkomplex von: 2-Hydroxy-4-(ß-sulfatoethylsulfonyl)-phenyl | dito | violett |
| 47 | 1:1-Kupferkomplex von: 2-Hydroxy-4-(ß-sulfatoethylsulfonyl)-5-methoxy-phenyl | dito | blau |
| 48 | 1:1-Kupferkomplex von: 8-(ß-Sulfatoethylsulfonyl)-6-sulfo-1-hydroxy-naphth-2-yl | dito | blau |
| 49 | 1:1-Kupferkomplex von: 3-[2'-Hydroxy-5'-(ß-sulfatoethylsulfonyl)-phenylazo]-2-sulfo-4-hydroxy-napht-7-yl | dito | dunkel-blau |
| 50 | 3-Sulfo-4-[3'-(ß-sulfatoethylsulfonyl)-phenyl-amino]-phenyl | dito | blau |
| 51 | 3-Sulfo-4-[2'-methoxy-5'-(ß-sulfatoethylsulfonyl)-phenylamino]-phenyl | dito | blau |

| Bsp. | Rest D- | Rest -K-N(R)- | Farbton |
|---|---|---|---|
| 52 | 6-Sulfo-4-[3'-(ß-sulfato-ethylsulfonyl)-4'-meth-oxyphenylazo]-naphth-1-yl | 6-Sulfo-naphth-ylen(2,1)-1-amino | braun |
| 53 | 6-Sulfo-4-[1'-sulfo-6'-(ß-sulfatoethylsulfonyl)-naphth-2'-yl-azo]-naphth-1-yl | 3-Methyl-phen-ylen(4,1)-1-amino | braun |
| 54 | 1:2-Chromkomplex von: 2-Hydroxy-5-(ß-sulfato-ethylsulfonyl)-phenyl | 2,7-Disulfo-4-hydroxy-naphth-ylen(3,5)-5-amino | marineblau |
| 55 | 1:2-Kobaltkomplex von: dito | dito | violett |
| 56 | 1:2-Chromkomplex von: 2-Carboxy-phenyl | 2-Sulfo-4-hydroxy-naphth-ylen(3,7)-7-amino | rotbraun |

**Beispiel 57**

19 Teile Cyanurchlorid werden in 200 Teilen Eiswasser dispergiert und mit 18,8 Teilen 1,3-Diaminobenzol-4-sulfonsäure versetzt. Man rührt zunächst zwei Stunden bei 0 bis 5 °C und einem pH-Wert von 2,5 und sodann 30 Minuten bei 0 bis 5 °C und einem pH-Wert von 4 weiter und gibt anschließend 4,25 Teile Cyanamid hinzu. Mittels wäßriger Natronlauge stellt man einen pH-Wert von 10 ein, erwärmt den Ansatz allmählich auf 50 bis 60 °C, rührt ihn danach noch etwa 90 Minuten in diesem Temperaturbereich und bei diesem pH-Wert nach und stellt ihn sodann mittels Salzsäure auf einen pH-Wert von 7. Die so erhaltene 2-Sulfo-5-(2'-chlor-4'-cyanamido-s-triazin-6-yl)-amino-anilin-Verbindung wird direkt in ihrer Syntheselösung auf übliche Weise diazotiert, indem man sie zunächst mit 20 Volumenteilen einer wäßrigen 5n-Natriumnitritlösung versetzt und den Ansatz langsam in ein Gemisch aus 50 Volumenteilen einer wäßrigen konzentrierten Salzsäure und 600 Teilen Eis gibt. Man rührt noch 2 Stunden nach, zerstört gegebenenfalls überschüssige salpetrige Säure mittels Amidosulfonsäure und gibt sodann die erhaltene Diazoniumsalzsuspension in eine wäßrige Lösung von 36,2 Teilen 1-[4'-(β-sulfatoethylsulfonyl)-phenyl]-3-methyl-5-pyrazolon; man führt die Kupplungsreaktion bei 15 bis 25 °C und einem pH-Wert von 4,5 bis 5,5 durch und klärt anschließend die Syntheselösung mittels Kieselgur bei 40 bis 50 °C und Filtration.

Man isoliert die erfindungsgemäße Azoverbindung der Formel (in Form der freien Säure geschrieben)

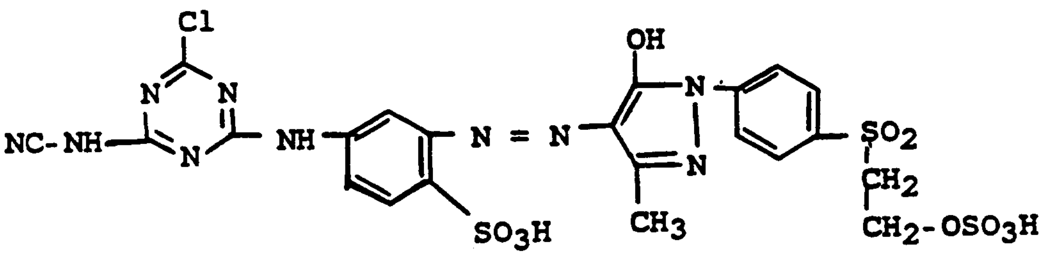

($\lambda_{max}$ = 398 nm)

durch Sprühtrocknung des Filtrats als dessen Alkalimetallsalz (Natriumsalz). Sie besitzt sehr gute faserreaktive Farbstoffeigenschaften und färbt beispielsweise Baumwolle in kräftigen, gelben Tönen mit guten Echtheitseigenschaften, von denen insbesondere die gute Tageslichtechtheit und die gute Schweißechtheit hervorgehoben werden können.

**Beispiel 58**

Man setzt gemäß den Angaben des Beispieles 57 19 Teile Cyanurchlorid mit 18,8 Teilen 1,3-Diaminobenzol-4-sulfonsäure und anschließend mit 4,4 Teilen Cyanamid um, diazotiert dieses Kondensationsprodukt, gibt die erhaltene Diazoniumsalzsuspension in eine wäßrige Lösung von 60 Teilen 4-Hydroxy-5-amino-6-[4'-(β-sulfatoethylsulfonyl)-phenylazo]-naphthalin-2,7-disulfonsäure und führt die Kupplungsreaktion bei 15 bis 25 °C und einem pH-Wert von 4,5 bis 5,5 durch. Man klärt die Syntheselösung mittels Kieselgur und Filtration und dampft das Filtrat unter reduziertem Druck zur Trockne ein.

Man erhält ein schwarzes, elektrolythaltiges Pulver des Alkalimetallsalzes (Natriumsalzes) der erfindungsgemäßen Azoverbindung der Formel (in Form der freien Säure geschrieben)

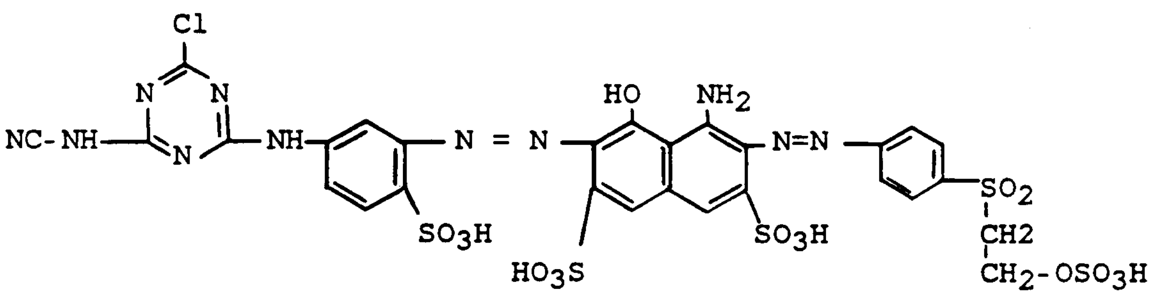

($\lambda_{max}$ = 595 nm).

Die erfindungsgemäße Azoverbindung besitzt sehr gute faserreaktive Farbstoffeigenschaften und färbt die in der Beschreibung genannten Materialien, insbesondere Cellulosefasermaterialien, wie Baumwolle, nach den für faserreaktive Farbstoffe üblichen Anwendungsverfahren in farbstarken, marineblauen Tönen.

**Beispiele 59 bis 69**

In den nachfolgenden Tabellenbeispielen sind weitere erfindungsgemäße Azofarbstoffe entsprechend einer allgemeinen Formel (B)

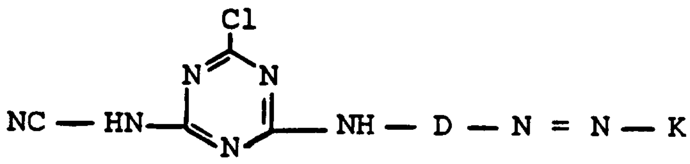

(B)

mit Hilfe der Formelreste der allgemeinen Formel (B) beschrieben. Sie lassen sich in erfindungsgemäßer Weise, beispielsweise analog den obigen Ausführungsbeispielen 57 und 58, unter Einsatz der aus der allgemeinen Formel (B) ersichtlichen Ausgangskomponenten (beispielsweise dem Phenylendiamin der Formel $H_2N$-D-$NH_2$, der Kupplungskomponente H-K, Cyanurchlorid und Cyanamid) herstellen. Sie besitzen sehr gute faserreaktive Farbstoffeigenschaften und färben die in der Beschreibung genannten Materialien, wie insbesondere Cellulosefasermaterialien, beispielsweise Baumwolle, nach den in der Technik für faserreaktive Farbstoffe üblichen Applikations- und Fixierverfahren in farbstarken, in dem jeweiligen Tabellenbeispiel angegebenen Farbtönen (hier auch Baumwolle) mit guten Echtheitseigenschaften.

| Bsp. | Rest -D- | Rest -K | Farbton |
|---|---|---|---|
| 59 | 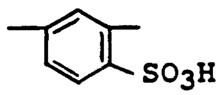 | 1-[2'-Sulfo-4'-(ß-sulfatoethylsulfonyl)-phenyl]-3-methyl-pyrazol-5-on-4-yl | gelb |
| 60 | dito | 1-[4'-(ß-Sulfatoethyl-sulfonyl)-phenyl]-3-carboxy-pyrazol-5-on-4-yl | gelb |
| 61 | dito | 1-[2'-Sulfo-4'-(ß-sulfatoethylsulfonyl)-phenyl]-3-carbomethoxy-pyrazol-5-on-4-yl | gelb |
| 62 | 4,6-Disulfo-1,3-phenylen | 1-[4'-(ß-Sulfatoethyl-sulfonyl)-phenyl]-3-methyl-pyrazol-5-on-4-yl | gelb |
| 63 | dito | 1-[4'-(ß-Sulfatoethyl-sulfonyl)-phenyl]-3-carbomethoxy-pyrazol-5-on-4-yl | gelb |
| 64 | 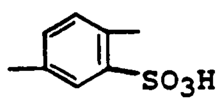 | 1-[4'-(ß-Sulfatoethyl-sulfonyl)-phenyl]-3-carboxy-pyrazol-5-on-4-yl | gelb |
| 65 | 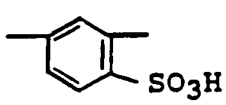 | 4-Hydroxy-6-[N-methyl-N-(ß-sulfatoethylsulfonyl)-amino]-2-sulfo-naphth-3-yl | orange |
| 66 | dito | 4-Hydroxy-7-[N-methyl-N-(ß-sulfatoethylsulfonyl)-amino]-2-sulfo-naphth-3-yl | orange |

| Bsp. | Rest D- | Rest -K | Farbton |
|---|---|---|---|
| 67 | dito | 4-Hydroxy-5-amino-6-[4'-(ß-sulfatoethylsulfonyl)-phenylazo]-2,7-disulfo-naphth-3-yl | marine-blau |
| 68 | dito | 4-Hydroxy-5-amino-6-[2'-brom-4'-(ß-sulfatoethyl-sulfonyl)-phenylazo]-2,7-disulfo-naphth-3-yl | marine-blau |
| 69 | dito | 4-Hydroxy-5-amino-6-[2'-methoxy-5'-(ß-sulfatoethyl-sulfonyl)-phenylazo]-2,7-disulfo-naphth-3-yl | marineblau |

## Patentansprüche

1. Wasserlöslicher Azofarbstoff entsprechend der allgemeinen Formel (1)

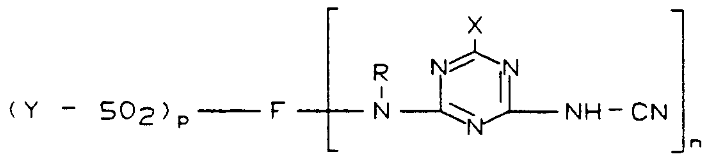

(1)

in welcher bedeuten:

F ist der Rest eines Monoazo-, Disazo- oder Polyazofarbstoffes oder eines Schwermetallkomplex-Azofarbstoffes;

R ist Wasserstoff oder Alkyl von 1 bis 4 C-Atomen, das durch Halogen, Hydroxy, Cyano, Alkoxy von 1 bis 4 C-Atomen, Alkoxycarbonyl von 2 bis 5 C-Atomen, Carboxy, Sulfamoyl, Sulfo oder Sulfato substituiert sein kann;

X ist Chlor, Brom, Sulfo, Alkylsulfonyl mit 1 bis 4 C-Atomen oder Phenylsulfonyl;

Y ist Vinyl, $\beta$-Sulfatoethyl, $\beta$-Thiosulfatoethyl, $\beta$-Phosphatoethyl, $\beta$-Alkanoyloxy-ethyl mit 2 bis 5 C-Atomen im Alkanoylrest, $\beta$-Benzoyloxy-ethyl, $\beta$-(Sulfobenzoyloxy)-ethyl, $\beta$-(p-Toluolsulfonyloxy)-ethyl oder $\beta$-Halogenethyl;

p ist die Zahl 1 oder 2;

n ist die Zahl 1 oder 2.

2. Farbstoff nach Anspruch 1, dadurch gekennzeichnet, daß R Methyl, Ethyl oder Wasserstoff ist.

**3.** Farbstoff nach Anspruch 1 entsprechend der allgemeinen Formel

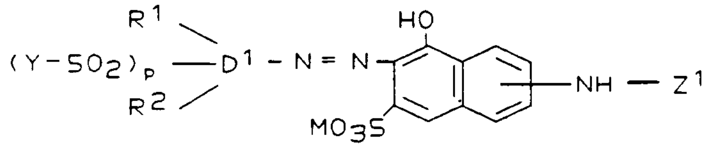

in welcher

| | |
|---|---|
| Y und p | die in Anspruch 1 genannten Bedeutungen haben, |
| M | Wasserstoff oder ein Alkalimetall ist, |
| $R^1$ | Wasserstoff, Alkyl von 1 bis 4 C-Atomen, Alkoxy von 1 bis 4 C-Atomen, Halogen, Trifluormethyl, Carboxy oder Sulfo ist, |
| $R^2$ | Wasserstoff, Alkyl von 1 bis 4 C-Atomen, Alkoxy von 1 bis 4 C-Atomen, Halogen oder Sulfo ist, |
| $D^1$ | ein Benzol- oder ein Naphthalinring ist und |
| $Z^1$ | eine Gruppe der allgemeinen Formel (3a) |

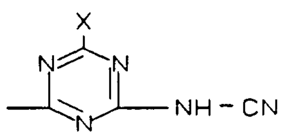

(3a)

ist, in welcher X die in Anspruch 1 genannte Bedeutung hat.

**4.** Farbstoff nach Anspruch 1 entsprechend der allgemeinen Formel

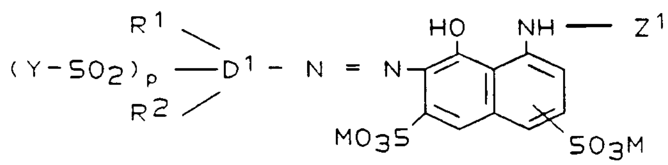

in welcher

| | |
|---|---|
| Y und p | die in Anspruch 1 genannten Bedeutungen haben, |
| M | Wasserstoff oder ein Alkalimetall ist, |
| $R^1$ | Wasserstoff, Alkyl von 1 bis 4 C-Atomen, Alkoxy von 1 bis 4 C-Atomen, Halogen, Trifluormethyl, Carboxy oder Sulfo ist, |
| $R^2$ | Wasserstoff, Alkyl von 1 bis 4 C-Atomen, Alkoxy von 1 bis 4 C-Atomen, Halogen oder Sulfo ist, |
| $D^1$ | ein Benzol- oder ein Naphthalinring ist und |
| $Z^1$ | eine Gruppe der allgemeinen Formel (3a) |

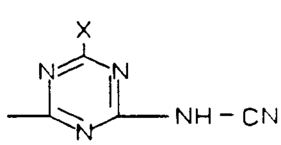

(3a)

ist, in welcher X die in Anspruch 1 genannte Bedeutung hat.

**5.** Farbstoff nach Anspruch 1 entsprechend der allgemeinen Formel

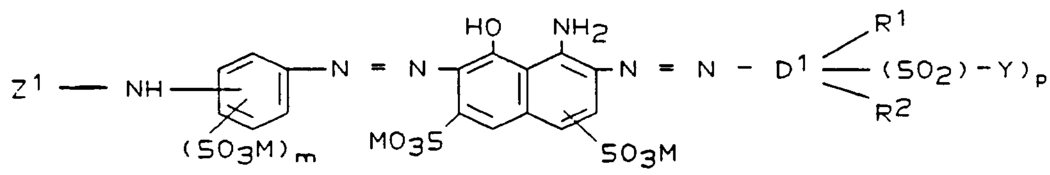

in welcher

| | |
|---|---|
| Y und p | die in Anspruch 1 genannten Bedeutungen haben, |
| M | Wasserstoff oder ein Alkalimetall ist, |
| m | die Zahl Null, 1 oder 2 ist, |
| $R^1$ | Wasserstoff, Alkyl von 1 bis 4 C-Atomen, Alkoxy von 1 bis 4 C-Atomen, Halogen, Trifluormethyl, Carboxy oder Sulfo ist, |
| $R^2$ | Wasserstoff, Alkyl von 1 bis 4 C-Atomen, Alkoxy von 1 bis 4 C-Atomen, Halogen oder Sulfo ist, |
| $D^1$ | ein Benzol- oder ein Naphthalinring ist und |
| $Z^1$ | eine Gruppe der allgemeinen Formel (3a) |

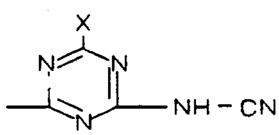

(3a)

ist, in welcher X die in Anspruch 1 genannte Bedeutung hat.

**6.** Farbstoff nach Anspruch 1 der allgemeinen Formel

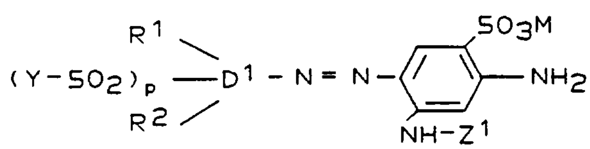

in welcher

| | |
|---|---|
| Y und p | die in Anspruch 1 genannten Bedeutungen haben, |
| M | Wasserstoff oder ein Alkalimetall ist, |
| $R^1$ | Wasserstoff, Alkyl von 1 bis 4 C-Atomen, Alkoxy von 1 bis 4 C-Atomen, Halogen, Trifluormethyl, Carboxy oder Sulfo ist, |
| $R^2$ | Wasserstoff, Alkyl von 1 bis 4 C-Atomen, Alkoxy von 1 bis 4 C-Atomen, Halogen oder Sulfo ist, |
| $D^1$ | ein Benzol- oder ein Naphthaliring ist und |
| $Z^1$ | eine Gruppe der allgemeinen Formel (3a) |

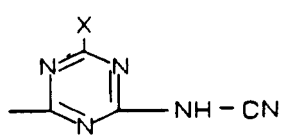

(3a)

ist, in welcher X die in Anspruch 1 genannte Bedeutung hat.

**7.** Farbstoff nach mindestens einem der Ansprüche 1 bis 6, dadurch gekennzeichnet, daß X Chlor ist.

**8.** Farbstoff nach mindestens einem der Ansprüche 1 bis 7, dadurch gekennzeichnet, daß Y Vinyl oder $\beta$-Sulfatoethyl ist.

**9.** Farbstoff nach mindestens einem der Ansprüche 1, 2, 7 und 8, dadurch gekennzeichnet, daß n die Zahl 1 oder 2 ist.

**10.** Verfahren zur Herstellung eines Farbstoffes von mindestens einem der Ansprüche 1 bis 9, dadurch gekennzeichnet, daß man für den jeweiligen Farbstoff typische Vorprodukte, von denen mindestens eines eine Gruppe der allgemeinen Formel (3)

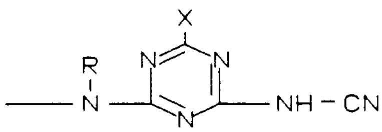 (3)

mit R und X der in Anspruch 1 genannten Bedeutung und mindestens eines eine Gruppe der allgemeinen Formel $-SO_2-Y$ mit Y der in Anspruch 1 angegebenen Bedeutung enthält, analog bekannten Verfahrensweisen miteinander umsetzt, oder daß man eine aminogruppenhaltige Ausgangsverbindung der allgemeinen Formel (14)

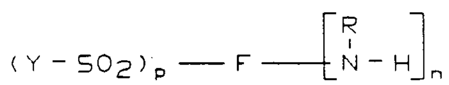 (14)

in welcher Y, p, F, R und n die in Anspruch 1 genannten Bedeutungen haben, mit einem Halogen-s-triazin der allgemeinen Formel (15)

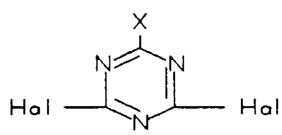 (15)

in welcher Hal für ein Chlor- oder Bromatom steht und X die in Anspruch 1 oder 7 genannte Bedeutung besitzt, und mit Cyanamid oder einem Alkalimetallsalz davon in stöchiometrischen Mengen in beliebiger Reihenfolge miteinander umsetzt und gegebenenfalls anschließend weitere erforderliche Umwandlungsreaktionen durchführt,
oder daß man eine Diazo- und Kupplungskomponente des Farbstoffes der Ansprüche 1 bis 9, von denen die eine Komponente eine oder zwei Gruppen der allgemeinen Formel $-SO_2-Y$ mit Y der obengenannten Bedeutung enthält und die andere einen Rest der oben genannten und definierten allgemeinen Formel (3) besitzt, durch Diazotierungs- und Kupplungsreaktion miteinander umsetzt,
oder daß man eine Azoverbindung, die der allgemeinen Formel (1) entspricht, in welcher jedoch die Gruppe(n) $-SO_2-y$ $\beta$-Hydroxyethyl-Gruppen darstellen, in einen Farbstoff von Anspruch 1 mit Y der in Anspruch 1 oder 8 genannten Bedeutung überführt,
oder daß man im Falle der Herstellung eines Schwermetallkomplex-Azofarbstoffes einen o,o'-Dihydroxy- oder o-Hydroxy-o'-carboxy-Azofarbstoff entsprechend der allgemeinen Formel (1) mit einem ein Schweimetallion abgebenden Agenz umsetzt.

**11.** Verfahren nach Anspruch 10, dadurch gekennzeichnet, daß man eine Verbindung der allgemeinen Formel (16)

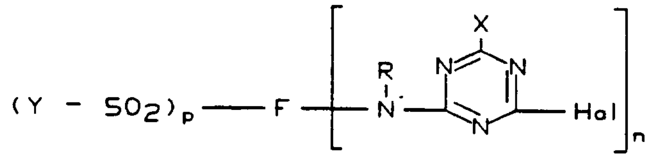

(16)

in welcher Y, p, F, R, X, Hal und n die in den Ansprüchen 1 bis 9 genannten Bedeutungen haben, mit Cyanamid oder einem Alkalimetallsalz davon umsetzt, oder daß man eine Aminoverbindung der allgemeinen Formel (14) mit einer Verbindung der allgemeinen Formel (17)

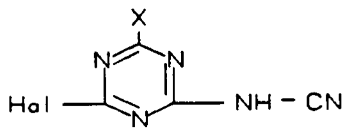

(17)

in welcher X und Hal die in Anspruch 1 oder 7 bzw. 10 genannten Bedeutungen haben, umsetzt.

**12.** Verwendung einer Verbindung der allgemeinen Formel (1) von mindestens einem der Ansprüche 1 bis 11 zum Färben (einschließlich Bedrucken) von hydroxy- und/oder carbonamidgruppenhaltigem Material, insbesondere Fasermaterial.

**13.** Verfahren zum Färben (einschließlich Bedrucken) von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mit Hilfe eines alkalisch wirkenden Mittels fixiert, dadurch gekennzeichnet, daß man als Farbstoff eine Verbindung entsprechend der allgemeinen Formel (1) gemäß mindestens einem der Ansprüche 1 bis 11 einsetzt.

## Claims

**1.** A water-soluble azo dye of the formula (1),

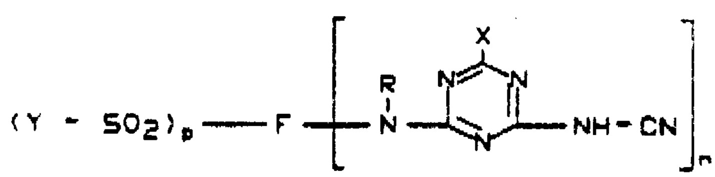

(1)

in which the symbols have the following meanings:

F is the radical of a monoazo, disazo or polyazo dye or a heavy metal complex azo dye;

R is hydrogen or alkyl of 1 to 4 carbon atoms, which can be substituted by halogen, hydroxyl, cyano, alkoxy of 1 to 4 carbon atoms, alkoxycarbonyl of 2 to 5 carbon atoms, carboxyl, sulfamoyl, sulfo or sulfato;

X is chlorine, bromine, sulfo, alkylsulfonyl of 1 to 4 carbon atoms or phenylsulfonyl;

Y is vinyl, β-sulfatoethyl, β-thiosulfatoetbyl, β-phosphatoethyl. β-alkanoyloxyethyl of 2 to 5 carbon atoms in the alkanoyl radical, β-benzoyloxyethyl, β-(sulfobenzoyloxy)ethyl, β-(p-toluenesulfonyloxy)ethyl or β-haloethyl;

p is the number 1 or 2;

n is the number 1 or 2.

**2.** A dye as claimed in claim 1, wherein R is methyl, ethyl or hydrogen.

**3.** A dye as claimed in claim 1 of the formula

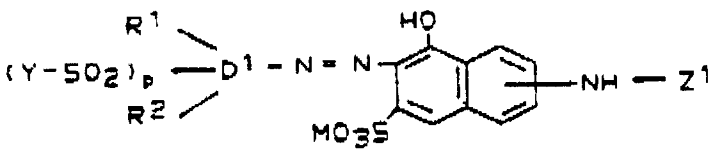

in which

| | |
|---|---|
| Y and p | have the meanings mentioned in claim 1, |
| M | is hydrogen or an alkali metal, |
| $R^1$ | is hydrogen, alkyl of 1 to 4 carbon atoms, alkoxy of 1 to 4 carbon atom, halogen, trifluoromethyl, carboxyl or sulfo, |
| $R^2$ | is hydrogen, alkyl of 1 to 4 carbon atoms, alkoxy of 1 to 4 carbon atoms, halogen or sulfo, |
| $D^1$ | is a benzene or naphthalene ring and |
| $Z^1$ | is a group of the formula (3a) |

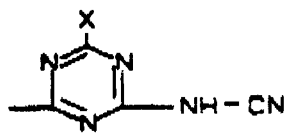

(3a)

in which X has the meaning mentioned in claim 1.

**4.** A dye as claimed in claim 1 of the formula

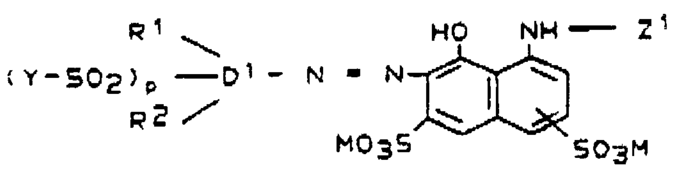

in which

| | |
|---|---|
| Y and p | have the meanings mentioned in claim 1, |
| M | is hydrogen or an alkali metal, |
| $R^1$ | is hydrogen, alkyl of 1 to 4 carbon atoms, alkoxy of 1 to 4 carbon atoms, halogen, trifluoromethyl, carboxyl or sulfo, |
| $R^2$ | is hydrogen, alkyl of 1 to 4 carbon atoms, alkoxy of 1 to 4 carbon atoms, halogen or sulfo, |
| $D^1$ | is a benzene or naphthalene ring and |
| $Z^1$ | is a group of the formula (3a) |

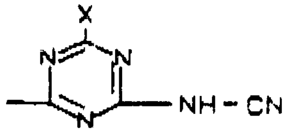

(3a)

in which X has the meaning mentioned in claim 1.

5. A dye as claimed in claim 1 of the formula

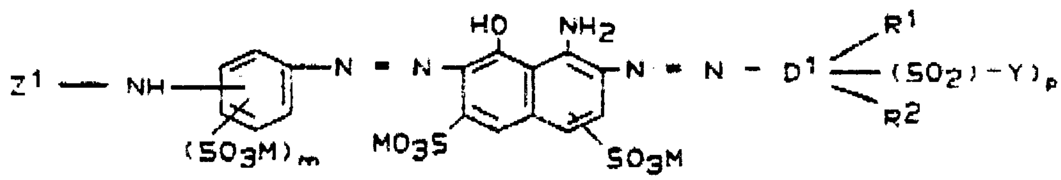

in which

| | |
|---|---|
| Y and p | have the meanings mentioned in claim 1, |
| M | is hydrogen or an alkali metal, |
| m | is the number zero, 1 or 2, |
| $R^1$ | is hydrogen, alkyl of 1 to 4 carbon atoms, alkoxy of 1 to 4 carbon atoms, halogen, trifluoromethyl, carboxyl or sulfo, |
| $R^2$ | is hydrogen, alkyl of 1 to 4 carbon atoms, alkoxy of 1 to 4 carbon atoms, halogen or sulfo, |
| $D^1$ | is a benzene or naphthalene ring and |
| $Z^1$ | is a group of the formula (3a) |

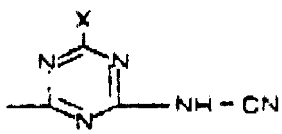

(3a)

in which X has the meaning mentioned in claim 1.

6. A dye as claimed in claim 1 of the formula

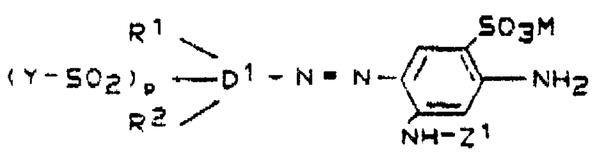

in which

| | |
|---|---|
| Y and p | have the meanings mentioned in claim 1, |
| M | is hydrogen or an alkali metal, |
| $R^1$ | is hydrogen, alkyl of 1 to 4 carbon atoms, alkoxy of 1 to 4 carbon atoms, halogen, trifluoromethyl, carboxyl or sulfo, |
| $R^2$ | is hydrogen, alkyl of 1 to 4 carbon atoms, alkoxy of 1 to 4 carbon atoms, halogen or sulfo, |
| $D^1$ | is a benzene or naphthalene ring and |
| $Z^1$ | is a group of the formula (3a) |

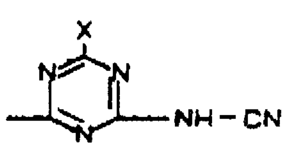

(3a)

in which X has the meaning mentioned in claim 1.

**7.** A dye as claimed in at least ore of claims 1 to 6, wherein X is chlorine.

**8.** A dye as claimed in at least one of claims 1 to 7, wherein Y is vinyl or $\beta$-sulfatoethyl.

**9.** A dye as claimed in at least one of claims 1, 2, 7 and 8, wherein n is the number 1 or 2.

**10.** A process for the preparation of a dye of at least one of claims 1 to 9, which comprises reacting precursors which are representative of the particular dye and at least one of which contains a group of the formula (3)

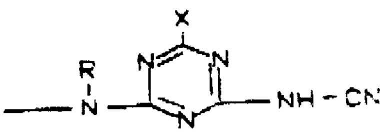
(3)

where R and X have the meaning mentioned in claim 1 and at least one of which contains a group of the formula $-SO_2-Y$ where Y has the meaning mentioned in claim 1, with one another analogously to known procedures, or reacting an amino-containing starting compound of the general formula (14)

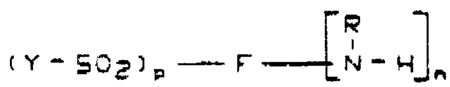
(14)

in which Y, p, F, R and n have the meanings mentioned in claim 1 with a halo-s-triazine of the formula (15)

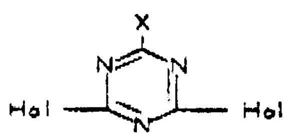
(15)

in which Hal is a chlorine or bromine atom and X has the meaning mentioned in claim 1 or 7, and with cyanamide or an alkali metal salt thereof in stoichiometric amounts in any desired order with one another and, if desired, subsequently carrying out further necessary conversion reactions,
or reacting a diazo and coupling component of the dye of claims 1 to 9, one component of which contains one or two groups of the formula $-SO_2-Y$ where Y has the abovementioned meaning and the other a radical of the formula (3) mentioned and defined above, by diazotization and coupling reactions with one another,
or converting an azo compound of the formula (1), but in which the group(s) $-SO_2-Y$ are $\beta$-hydroxyethyl groups, into a dye of claim 1 where Y has the meaning mentioned in claim 1 or 8,
or in the case of the preparation of a heavy metal complex azo dye reacting an o,o'-dihydroxy- or o-hydroxy-o'-carboxy azo dye of the formula (1) with an agent donating a heavy metal ion.

**11.** The process as claimed in claim 10, wherein a compound of the formula (16)

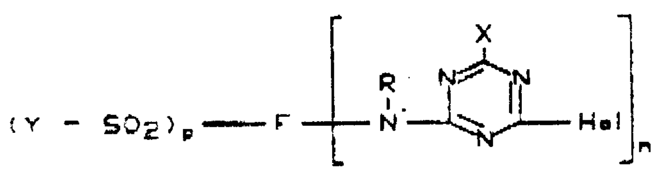
(16)

in which Y, p, F, R, X, Hal and n have the meanings mentioned in claims 1 to 9 is reacted with

cyanamide or an alkali metal salt thereof, or wherein an amino compound of the formula (14) is reacted with a compound of the formula (17)

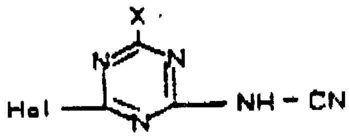

(17)

in which X and Hal have the meanings mentioned in claim 1 or 7 or 10.

**12.** Use of a compound of the formula (1) of at least one of claims 1 to 11 for the dyeing (including printing) of hydroxyl- and/or carboxamido-containing material, in particular fiber material.

**13.** A process for the dyeing (including printing) of hydroxyl- and/or carboxamido-containing material, in particular fiber material, in which a dye is applied to or incorporated in the material and fixed by means of heat and/or by means of an alkaline agent, wherein the dye used is a compound of the formula (1) as claimed in at least one of claims 1 to 11.

## Revendications

**1.** Colorant soluble dans l'eau, correspondant à la formule générale (1)

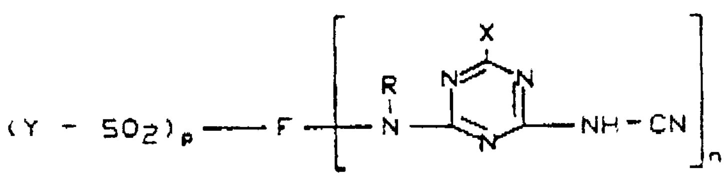

(1)

dans laquelle :
F représente le reste d'un colorant monoazoïque, disazoïque, ou polyazoïque, ou le reste d'un colorant azoïque-complexe de métal lourd ;
R représente un atome d'hydrogène ou un groupe alkyle en $C_1$-$C_4$, qui peut être substitué par les atomes d'halogène, ou les groupes hydroxy, cyano, alcoxy en $C_1$-$C_4$,alcoxycarbonyle en $C_2$-$C_5$, carboxy, sulfamoyle, sulfo ou sulfato ;
X représente un atome de chlore ou de brome, ou un groupe sulfo, alkylsulfonyle en $C_1$-$C_4$ ou phénylsulfonyle ;
Y représente un groupe vinyle, $\beta$-Sulfatoéthyle, $\beta$-thiosulfatoéthyle, $\beta$-phosphatoéthyle, $\beta$-alcanoyloxyéthyle comportant de 2 à 5 atomes de carbone dans le radical alcanoyle, $\beta$-benzoyloxyéthyle, $\beta$-(sulfobenzoyloxy)-éthyle, $\beta$-(p-toluènesulfonyloxy)-éthyle ou $\beta$-halogénoéthyle ;
p vaut 1 ou 2 ;
n vaut 1 ou 2.

**2.** Colorant selon la revendication 1, **caractérisé** en ce que R représente un groupe méthyle, éthyle ou un atome d'hydrogène.

**3.** Colorant selon la revendication 1, correspondant à la formule générale

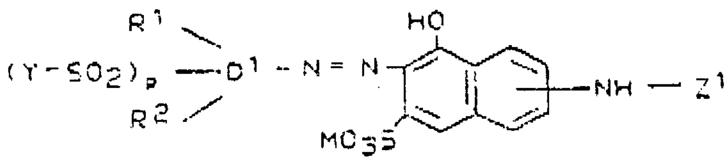

dans laquelle :
Y et p sont tels que définis dans la revendication 1,
M représente l'atome d'hydrogène ou un métal alcalin,
$R^1$ représente un atome d'hydrogène ou un groupe alkyle en $C_1$-$C_4$, alcoxy en $C_1$-$C_4$, ou un atome d'halogène, ou un groupe trifluorométhyle, carboxy ou sulfo,
$R^2$ représente un atome d'hydrogène, un groupe alkyle en $C_1$-$C_4$, alcoxy en $C_1$-$C_4$, ou un atome d'halogène, ou un groupe sulfo,
$D^1$ représente un noyau benzénique ou un noyau naphthalénique, et
$Z^1$ représente un groupe de formule générale (3a)

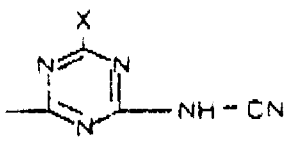

(3a).

dans laquelle X est tel que défini dans la revendication 1.

**4.** Colorant selon la revendication 1 correspondant à la formule générale

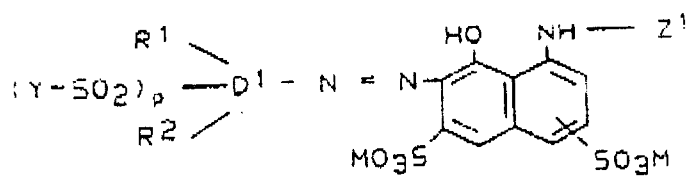

dans laquelle
Y et p sont tels que définis dans la revendication 1,
M représente un atome d'hydrogène ou un métal alcalin,
$R^1$ représente un atome d'hydrogène, un groupe alkyle en $C_1$-$C_4$, alcoxy en $C_1$-$C_4$, ou un atome d'halogène, ou un groupe trifluorométhyle, carboxy ou sulfo,
$R^2$ représente un atome d'hydrogène, un groupe alkyle en $C_1$-$C_4$, alcoxy en $C_1$-$C_4$, un atome d'halogène, ou un groupe sulfo,
$D^1$ représente un noyau benzénique ou un noyau naphthalénique, et
$Z^1$ représente un groupe de formule générale (3a)

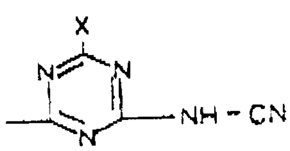

(3a)

dans laquelle X est tel que défini dans la revendication 1.

**5.** Colorant selon la revendication 1 correspondant à la formule générale

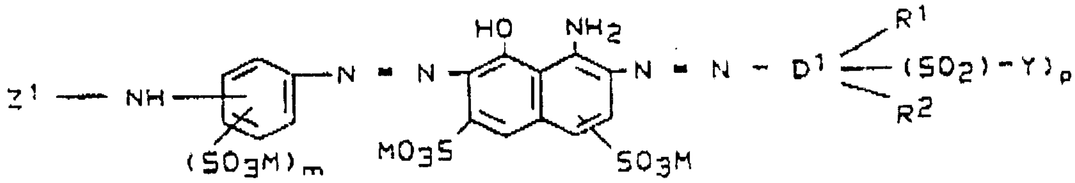

dans laquelle
Y et p dont tels que définis dans la revendication 1,
M représente un atome d'hydrogène ou un métal alcalin,
m vaut 0, 1 ou 2,
$R^1$ représente un atome d'hydrogène, un groupe alkyle en $C_1$-$C_4$, alcoxy en $C_1$-$C_4$, ou un atome d'halogène, ou un groupe trifluorométhyle, carboxy ou sulfo,
$R^2$ représente un atome d'hydrogène, un groupe alkyle en $C_1$-$C_4$, alcoxy en $C_1$-$C_4$, ou un atome d'halogène, ou un groupe sulfo,
$D^1$ représente un noyau benzénique ou un noyau naphthalénique, et
$Z^1$ représente un groupe de formule générale (3a)

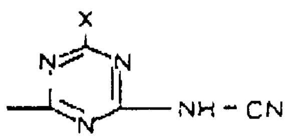

(3a)

dans laquelle X est tel que défini dans la revendication 1.

**6.** Colorant selon la revendication 1 de formule générale

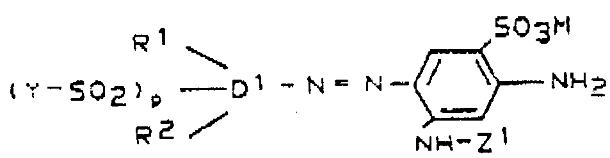

dans laquelle
Y et p sont tels que définis dans la revendication 1,
M représente un atome d'hydrogène ou un métal alcalin,
$R^1$ représente un atome d'hydrogène, ou un groupe alkyle en $C_1$-$C_4$, alcoxy en $C_1$-$C_4$, ou un atome d'halogène, ou un groupe trifluorométhyle, carboxy ou sulfo,
$R^2$ représente un atome d'hydrogène, un groupe alkyle en $C_1$-$C_4$, alcoxy en $C_1$-$C_4$, un atome d'halogène, ou un groupe sulfo,
$D^1$ représente un noyau benzénique ou un noyau naphthalénique, et
$Z^1$ représente un groupe de formule générale (3a)

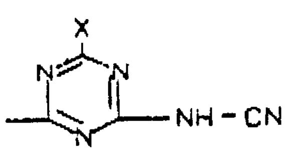

(3a)

dans laquelle X est tel que défini dans la revendication 1.

**7.** Colorant selon au moins l'une des revendications 1 à 6, **caractérisé** en ce que X représente un atome de chlore.

**8.** Colorant selon au moins l'une des revendications 1 à 7, **caractérisé** en se que Y représente un groupe vinyle ou un groupe $\beta$-sulfatoéthyle.

**9.** Colorant selon au moins l'une des revendications 1, 2, 7 et 8, **caractérisé** en ce que n vaut 1 ou 2.

**10.** Procédé de préparation d'un colorant selon au moins l'une des revendications 1 à 9, **caractérisé** en se que l'on fait réagir pour chaque colorant particulier les produits précurseurs caractéristiques de ce colorant, dont au moins un contient un groupe de formule générale (3)

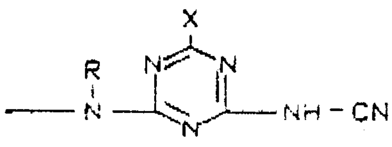

(3)

dans laquelle R et X sont tels que définis dans la revendication 1, et au moins un contient un groupe de formule générale $-SO_2-Y$ dans laquelle Y est tel que défini dans la revendication 1, ensemble, par des procédés analogues aux procédés connus, ou en ce que l'on fait réagir un composé de départ contenant des groupes amino de formule générale (14)

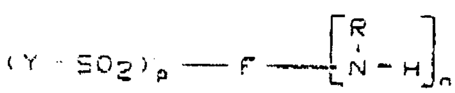

(14)

dans laquelle Y, p, F, R et n sont tels que définis dans la revendication 1, sur une halogéno-s-triazine de formule générale (15)

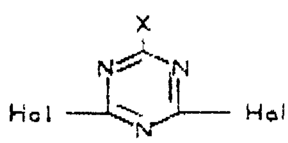

(15)

dans laquelle Hal représente un atome de chlore ou de brome et X est tel que défini dans la revendication 1 ou 7, et avec le cyanamide ou un sel de métal alcalin du cyanamide en quantités stoechiométriques, l'ordre de la réaction étant quelconque, et en ce que l'on effectue éventuellement ensuite d'autres réactions nécessaires de transformations, ou bien en ce que l'on fait réagir un composant diazoïque et de copulation du colorant selon les revendications 1 à 9, dont les uns contiennent 1 ou 2 groupes de formule générale $-SO_2-Y$ dans laquelle Y est tel que défini ci-dessus, et les autres contiennent un reste de formule générale (3) citée et définie ci-dessus, par des réactions de diazotation et de copulation,
ou bien en ce que on transforme un composé azoïque qui correspond à la formule générale (1), dans laquelle cependant le ou les groupe(s) $-SO_2-Y$ représente des groupes $\beta$-hydroxyéthyle, en un colorant selon la revendication 1 dans lequel Y est tel que défini dans les revendications 1 ou 8,
ou en ce que, dans le cas de la préparation d'un colorant azoïque-complexe de métal lourd, on fait réagir un colorant o,o'-dihydroxy- ou o-hydroxy-o'-carboxy-azoïque correspondant à la formule générale (1) avec un agent capable de libérer un ion de métal lourd.

**11.** Procédé selon la revendication 10, **caractérisé** en ce que l'on fait réagir un composé de formule générale (16)

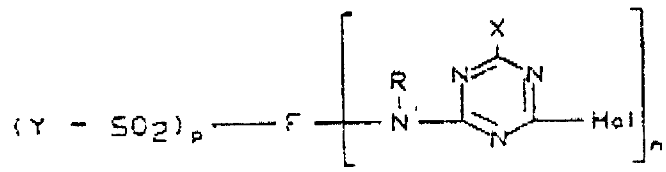

(16)

dans laquelle Y, p, F, R, X, Hal et n sont tels que définis dans les revendications 1 à 9, sur le cyanamide ou un sel de métal alcalin du cyanamide, ou bien en ce que on fait réagir un composé à groupes amino de formule générale (14) sur un composé de formule générale (17)

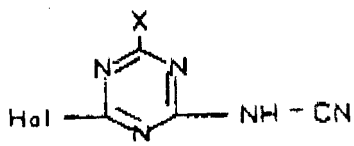

(17)

dans laquelle X et Hal dont tels que définis dans les revendications 1 ou 7 respectivement 10.

**12.** Utilisation d'un composé de formule (1) selon au moins une des revendications 1 à 11 pour la teinture (y compris l'impression) de matières contenant des groupes hydroxy et/ou carbonamide, en particulier de matières fibreuses de ce type.

**13.** Procédé pour la teinture (y compris l'impression) de matières, en particulier fibreuses, contenant des groupes hydroxy et/ou carbonamide, selon lequel on applique sur la matière, ou l'on incorpore dans la matière un colorant, et on le fixe dans ladite matière au moyen de la chaleur et/ou au moyen d'un agent à action alcaline, **caractérisé** en ce que l'on utilise comme colorant un composé correspondant à la formule générale (1) selon au moins l'une des revendications 1 à 11.